# EUROPEAN PATENT APPLICATION

(11) **EP 3 142 290 A1**
(43) Date of publication of application: **15.03.2017**
(21) Application number: 15789228.2
(22) Date of filing: 24.04.2015
(51) Int. Cl.: H04L 9/32, B60R 16/023, H04L 12/28, H04L 12/40

(54) **TRANSMISSION DEVICE, RECEPTION DEVICE, TRANSMISSION METHOD, AND RECEPTION METHOD**

(30) Priority: 08.05.2014 JP 2014097217
(71) Applicant: Panasonic Intellectual Property Management Co., Ltd., Osaka-shi, Osaka 570-6207 (JP)
(72) Inventor: TANABE, Masato, Osaka 540-6207 (JP); ANZAI, Jun, Osaka 540-6207 (JP); KITAMURA, Yoshihiko, Osaka 540-6207 (JP)
(74) Representative: Schwabe - Sandmair - Marx
(86) International application number: PCT/JP2015/002219
(87) International publication number: WO 2015/170457

(57) **Abstract**

A transmission device has a first generator, a second generator, and a transmitter. The first generator generates data to be broadcast-transmitted. The second generator generates a message authentication code for at least the data generated in the first generator. The transmitter broadcast-transmits the data generated in the first generator, and the message authentication code generated in the second generator. The second generator omits generating message authentication codes for one or some of a plurality of pieces of data generated in the first generator.

## Description

### TECHNICAL FIELD

The present invention relates to a transmission device and a reception device in a communication system which are connected by a bus, a transmission method, and a reception method.

### BACKGROUND ART

As an in-vehicle network, a CAN (Controller Area Network) is popular. The CAN is a serial communication protocol employing a bus type network. Messages from each node connected to the bus are broadcast to all nodes connected to the bus. The messages do not include identification information of a transmission source node and a destination node. Therefore, in a reception node, it is not possible to simply determine whether a received message is a message from a correct communication partner.

In order to ensure integrity of a message and to prevent a replay attack from an unauthorized device connected to the CAN, a method using a message authentication code (MAC) is proposed. For example, there is proposed a method for generating the MAC for an ordinary message, and transmitting the message containing the MAC, each time when generating/transmitting the ordinary message (refer to PTL 1, for example).

### Citation List

### Patent Literature

PTL 1: Unexamined Japanese Patent Publication No. 2013-98719

### SUMMARY OF THE INVENTION

The present invention provides a technique for improving security while suppressing the increase in the load of resources of a network.

A transmission device according to a certain aspect of the present invention has a first generator, a second generator, and a transmitter. The first generator generates data to be broadcast-transmitted. The second generator generates a message authentication code for at least the data generated in the first generator. The transmitter broadcast-transmits the data generated in the first generator, and the message authentication code generated in the second generator. The second generator omits generating message authentication codes for one or some of a plurality of pieces of data generated in the first generator.

An arbitrary combination of the above configuration elements, and a conversion of expressions of the present invention among methods, devices, systems, computer programs, and recording mediums storing therein computer programs, are also effective as an aspect of the present invention.

According to the present invention, security can be improved while suppressing the increase in the load of resources of a network.

### BRIEF DESCRIPTION OF DRAWINGS

FIG. 1 is a diagram illustrating an example of a format of a data frame used in a CAN.
FIG. 2 is a diagram illustrating an example of a configuration of a CAN system according to an exemplary embodiment of the present invention.
FIG. 3 is a diagram illustrating a configuration example of an electronic control unit (ECU) according to the exemplary embodiment of the present invention.
FIG. 4 is a block diagram illustrating functions necessary for transmission performed by a message processor in a scheme for transmitting a message authentication code (MAC) by a separate message.
FIG. 5 is a flowchart illustrating a message transmission process performed by the message processor in FIG. 4.
FIG. 6 is a block diagram illustrating functions necessary for reception performed by a message processor in the scheme for transmitting the MAC by a separate message.
FIG. 7 is a flowchart illustrating a message reception process performed by the message processor in FIG. 6.
FIG. 8 is a block diagram illustrating functions necessary for reception performed by the message processor assuming an abnormal case in the scheme for transmitting the MAC by a separate message.
FIG. 9 is a flowchart illustrating a main message reception process performed by a message processor in FIG. 8.
FIG. 10 is a flowchart illustrating a MAC message reception process performed by a message processor in FIG. 8.
FIG. 11A is a diagram illustrating an example of an authorized main message and an authorized MAC message.
FIG. 11B is a diagram illustrating a first example of an attack of inserting an unauthorized message between an authorized main message and an authorized MAC message.
FIG. 11C is a diagram illustrating a second example of an attack of inserting an unauthorized message between an authorized main message and an authorized MAC message.
FIG. 11D is a diagram illustrating a third example of an attack of inserting an unauthorized message between an authorized main message and an authorized MAC message.
FIG. 11E is a diagram illustrating a fourth example of an attack of inserting an unauthorized message between an authorized main message and an authorized MAC message.
FIG. 12 is a block diagram illustrating functions necessary for transmission performed by a message processor in a scheme for transmitting a MAC by the same message.
FIG. 13 is a flowchart illustrating a message transmission process performed by the message processor in FIG. 12.
FIG. 14 is a block diagram illustrating functions necessary for reception by a message processor in the scheme for transmitting a MAC by the same message.
FIG. 15 is a flowchart illustrating a message reception process performed by the message processor in FIG. 14.
FIG. 16 is a diagram illustrating a list of a plurality of concrete examples of a generation/transmission timing of a MAC.
FIG. 17 is a block diagram illustrating functions necessary for a MAC generation-timing determiner of a message processor in a scheme for generating/transmitting a MAC when data expressing a state has changed.
FIG. 18 is a flowchart illustrating a process for determining a MAC generation timing by the MAC generation-timing determiner in FIG. 17.
FIG. 19 is a diagram illustrating a concrete example of a scheme for generating/transmitting a MAC when data expressing a state has changed.
FIG. 20 is a diagram illustrating an example of a message transmitted from a transmission-side ECU to a reception-side ECU, in a scheme for generating/transmitting a MAC when data expressing a state has changed.
FIG. 21 is a block diagram illustrating functions necessary for the MAC generation-timing determiner of a message processor in a scheme for generating/transmitting a MAC when a change amount has exceeded a threshold value.
FIG. 22 is a flowchart illustrating a process for determining a MAC generation timing by the MAC generation-timing determiner in FIG. 21.
FIG. 23 is a diagram illustrating a concrete example of a scheme for generating/transmitting a MAC when a change amount has exceeded a threshold value.
FIG. 24 is a flowchart illustrating a process for determining a MAC generation timing by the MAC generation-timing determiner, in a scheme for generating/transmitting a MAC when a value has exceeded a threshold value.
FIG. 25 is a flowchart illustrating a process for determining a MAC generation timing by the MAC generation-timing determiner, in a scheme for generating/transmitting a MAC when a change of a value is a change in a prescribed direction.
FIG. 26 is a flowchart illustrating a process for determining a MAC generation timing by the MAC generation-timing determiner, in a scheme for generating/transmitting a MAC when a value is different from a default value.
FIG. 27 is a block diagram illustrating functions necessary for an MAC generation-timing determiner of a message processor in a scheme for generating/transmitting a MAC at a thinning cycle.
FIG. 28 is a flowchart illustrating a process for determining a MAC generation timing by the MAC generation-timing determiner in FIG. 27.
FIG. 29 is a diagram illustrating a concrete example of a scheme for generating/transmitting a MAC at the thinning cycle.
FIG. 30 is a block diagram illustrating functions necessary for the MAC generation-timing determiner of a message processor in a scheme for generating/transmitting a MAC in accordance with a cycle change.
FIG. 31 is a flowchart illustrating a process for determining a MAC generation timing by the MAC generation-timing determiner in FIG. 30.
FIG. 32 is a flowchart illustrating a process for determining a MAC generation timing, in a scheme for generating/transmitting a MAC in accordance with an event occurrence.
FIG. 33 is a flowchart illustrating a process for determining a MAC generation timing by the MAC generation-timing determiner, in a scheme for generating/transmitting a MAC in accordance with on demand.
FIG. 34 is a block diagram illustrating functions necessary for the MAC generation-timing determiner of a message processor in a scheme for generating/transmitting a MAC in accordance with a bus occupation rate.
FIG. 35 is a flowchart illustrating a process for determining a MAC generation timing by the MAC generation-timing determiner in FIG. 34.
FIG. 36 is a block diagram illustrating functions necessary for the MAC generation-timing determiner of a message processor in a scheme for generating/transmitting a MAC at random.
FIG. 37 is a flowchart illustrating a process for determining a MAC generation timing by the MAC generation-timing determiner in FIG. 36.
FIG. 38 is a flowchart illustrating a process for determining a MAC generation timing by the MAC generation-timing determiner, in a scheme for generating/transmitting a MAC in accordance with a vehicle state.
FIG. 39 is a block diagram illustrating a configuration of a message processor having a function for counting the number of unauthorized messages for which MAC verification is unsuccessful.

### DESCRIPTION OF EMBODIMENT

Prior to the description of the exemplary embodiment of the present invention, problems of a conventional device will be briefly described. When a MAC is generated each time when the ordinary message is generated/transmitted, the load of the node becomes large and the power consumption also increases. Further, because the number of messages increases, a bus occupation rate also increases.

Hereinafter, a transmission device and a reception device according to an exemplary embodiment of the present invention will be described. The exemplary embodiment of the present invention relates to an in-vehicle network in which a plurality of ECUs (Electronic Control Units) mounted in a vehicle are connected as nodes, and a message containing a message identifier (ID), data, and the MAC is broadcast. Hereinafter, the exemplary embodiment of the present invention will be described by exemplifying a CAN system as such a network. As described above, the CAN employs a bus type network, and a message from each ECU connected to the bus is broadcast to all ECUs connected to the bus. In recent years, along with a progress of equipment of electronic devices in a vehicle, the number of ECUs mounted in one vehicle and an amount of data handled by the ECUs are increasing, accordingly a traffic amount of a CAN bus is increasing. Further, along with an increase and sophistication of the ECUs, power consumption of batteries is also increasing.

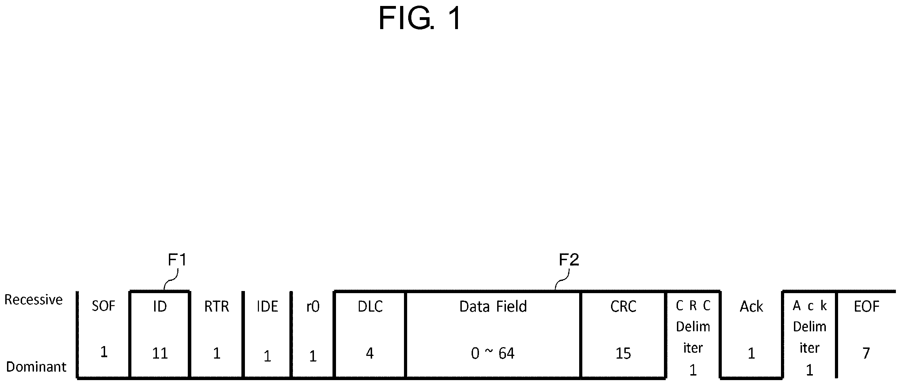

FIG. 1 is a diagram illustrating an example of a format of a data frame used in the CAN. This data format is described in the following standards document; ISO 11898-1:2003 Road vehicles -- Controller area network (CAN)--Part1: Data link layer and physical signalling.

The data frame in FIG. 1 includes SOF, ID field, RTR, IDE, r0, DLC, data field, CRC delimiter, Ack, Ack delimiter, and EOF. A number in each box expresses a bit number. An item in a box whose upper part is opened is an item that always takes "0", and an item in a box whose lower part is opened is an item that always takes "1". An item in a box whose upper and lower pars are unopened is an item that can take both "0" and "1".

In the present exemplary embodiment, mainly ID field F1 and data field F2 are focused. An ID stored in ID field F1 (hereinafter, also appropriately referred to as CANID) is identification information that expresses a kind and priority of a message. In the present specification, a data frame in a transmittable state is called a message. A message in the CAN is a message concerning a specific function in the vehicle. The function contains a monitoring function for monitoring a specific monitoring target, and a control function for controlling a specific control target. For example, messages concerning specific functions in the vehicle include a message containing speed information, a message for instructing opening and closing of the door.

The CANID is related to information contained in a transmitted message. An ECU that has received the message determines the information contained in the message, based on the CANID. Data field F2 can store data of maximum 64 bits.

As illustrated in FIG. 1, a data frame of the CAN does not contain a transmission destination ID and a reception destination ID. Therefore, a reception-side ECU cannot determine whether a message is from a correct communication partner. For example, a message containing an engine rotation number is transmitted from the engine ECU. When a message provided with a CANID that is the same as the CANID given to the message is transmitted from an unauthorized ECU, the reception-side ECU cannot determine whether the message is transmitted from an authorized engine ECU or from the unauthorized ECU.

In this way, a CAN protocol may be susceptible to impersonation. Further, because the message is broadcast-transmitted to the CAN bus, the message is more likely to be stolen than the message that is unicast-transmitted.

Against these threats, in the present exemplary embodiment, a CAN message is authenticated by using the MAC. The MAC is generated by applying a predetermined MAC algorithm to data to be authenticated and to a common key. The common key is a secret key shared beforehand among ECUs connected to the CAN. The MAC generation algorithm includes a scheme using a hash function (HMAC), and a scheme using a block encryption algorithm (OMAC/CMAC, CBC-MAC, PMAC). The reception-side ECU calculates the MAC by applying the MAC algorithm used by a transmission-side ECU, to the data to be authenticated contained in the message and to the common key of the reception-side ECU. When the calculated MAC and the received MAC coincide with each other, it is determined that the authentication is successful, and when the calculated MAC and the received MAC do not coincide with each other, it is determined that the authentication is unsuccessful.

Therefore, unless the common key is leaked out, a message from an unauthorized ECU or from a malicious transmission source will not be authenticated. A retransmission attack from the unauthorized ECU and the like that have received the authorized message and MAC can be coped with by containing a count value and the like in the data to be authenticated. In the present exemplary embodiment, a data length of the MAC generated by the transmission-side ECU is 64 bits or smaller. When the MAC having a data length greater than 64 bits is calculated, arbitrary 64 bits or smaller bits are extracted to be used.

Hereinafter, in the present specification, a message that contains information concerning a specific function (hereinafter, appropriately referred to as ordinary data) and does not contain the MAC in a data field is called a main message. The main message is a message transmitted for carrying out an ordinary control. A control value of a specific function or the like corresponds to the ordinary data. A message not containing ordinary data and containing the MAC in the data field is called a MAC message. A message containing both ordinary data and the MAC in the data field is called a MAC-attached main message.

In the above description, the CANID is related to the information contained in the message. In this case, depending on whether the message is the main message, the MAC message, or the MAC-attached main message, the message may be attached with a separate ID or may be attached with the same ID.

Each time when each ECU transmits a main message, a process for generating the MAC is carried out. When the MAC message is transmitted to the CAN, a processing load and consumption current of the ECU increase, and the bus occupation rate also increases. Because the process for generating the MAC includes an encryption process, the processing load of the ECU increases. Because some of ECUs in the vehicle have insufficient processing capacity, suppressing the processing load is desirable. When consumption current of the ECU increases in the vehicle, power of batteries is consumed rapidly, and the battery is easily dead, and battery life becomes short. Therefore, the consumption current of the ECU is desirably low. In the CAN, in order to avoid a communication failure due to the increase in the bus occupation rate, the bus occupation rate is generally set lower than a certain constant value. When the MAC message is transmitted each time when a main message is transmitted, the number of messages simply becomes a double of the number of messages in the conventional art.

In view of the above problems, the exemplary embodiment described below provides a method for efficiently ensuring security while decreasing transmission frequency, by devising a timing of transmitting the MAC, instead of transmitting the MAC each time a main message is transmitted. That is, by omitting generation/transmission of MACs for one or some pieces of ordinary data out of a plurality of pieces of ordinary data to be transmitted, the increase in the processing load and consumption current of the ECUs is suppressed, and the increase in the bus occupation rate is also suppressed. In the subsequent description, the expression of "generation/transmission" means any one of "generation and transmission" and "transmission only".

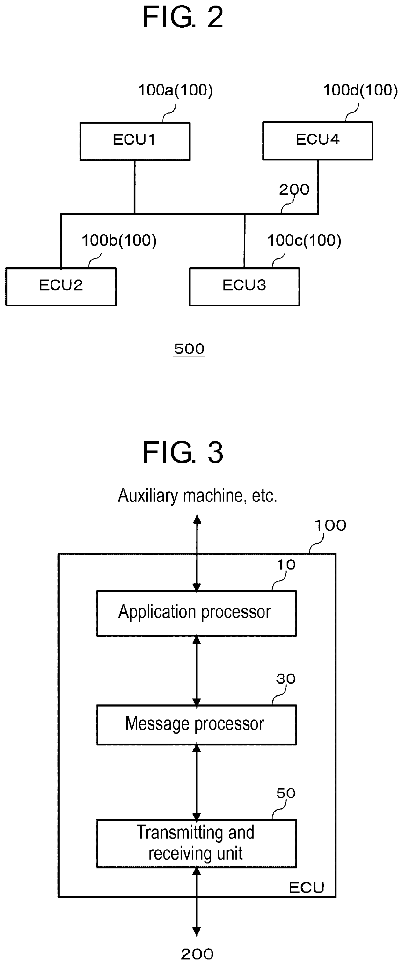

FIG. 2 is a diagram illustrating an example of a configuration of CAN system 500 according to an exemplary embodiment of the present invention. In CAN system 500, a plurality of ECUs 100 (ECU1 (100a), ECU2 (100b), ECU3 (100c), and ECU4 (100d) in FIG. 2) are connected to CAN bus 200. The CAN employs an access control scheme called CSMA/CA (Carrier Sense Multiple Access with Collision Avoidance). ECU 100 that first starts transmission to CAN bus 200 obtains a transmission right. When a plurality of ECUs 100 have transmitted at the same time, communication arbitration (bus arbitration) is carried out. In the CAN, ECU 100 having a smaller CANID has a priority.

FIG. 3 is a diagram illustrating a configuration example of electronic control unit (ECU) 100 according to the exemplary embodiment of the present invention. ECU 100 includes application processor 10, message processor 30, and transmitting and receiving unit 50. The configurations of these units can be realized by arbitrary processor, memory, and other LSI by hardware, and can be realized by programs loaded on memories by software. FIG. 3 illustrates function blocks realized by linkage of the hardware and software. Therefore, persons skilled in the art concerned can understand that the function blocks can be realized by only hardware, or by only software, or by combinations of hardware and software.

Application processor 10 is realized by a processor, a memory, and an application programs loaded in the memories, for example. Message processor 30 is realized by a processor, a memory, a message processing program loaded in the memories, and a CAN controller, for example. A configuration of installing all functions in the CAN controller is also possible. Transmitting and receiving unit 50 is realized by a transceiver, for example.

Application processor 10 is connected to a control target or a monitoring target of each ECU 100 (for example, engine, steering, brake, or other various auxiliary machines), and obtains status information or instruction information from the control target or the monitoring target. Application processor 10 generates data to be broadcast-transmitted in the CAN, based on the information obtained from the control target or the monitoring target, and delivers the data to message processor 30. Further, application processor 10 receives from message processor 30 the data contained in a main message received via CAN bus 200 (through CAN bus 200 from other ECUs), and controls the control target or the monitoring target in accordance with the data.

Message processor 30 generates a message at a message transmission time, and analyzes the message at a message reception time. A concrete configuration of message processor 30 will be described later.

Transmitting and receiving unit 50 broadcast-transmits the message generated by message processor 30, to CAN bus 200. As described above, the message includes the main message, the MAC message, and the MAC-attached main message. Message processor 30 generates the MAC for at least the ordinary data generated by application processor 10. The MAC may be transmitted by being contained in a main message containing the ordinary data, or transmitted by a separate message. In the former case, the MAC-attached main message is transmitted, and in the latter case, a main message and the MAC message are transmitted separately. Both cases are the same in that the ordinary data and the MAC for the ordinary data are broadcast-transmitted to CAN bus 200.

Transmitting and receiving unit 50 receives, from CAN bus 200, a message generated by other ECUs 100 and broadcast-transmitted to CAN bus 200. Transmitting and receiving unit 50 delivers the received message to message processor 30.

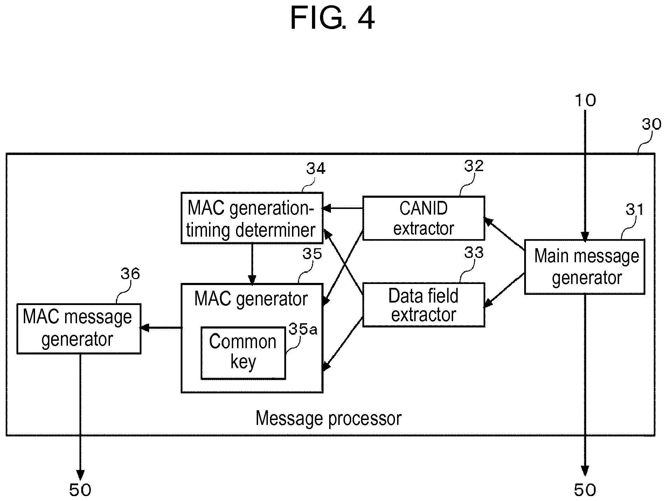

FIG. 4 is a block diagram illustrating functions necessary for transmission performed by message processor 30 in a scheme for transmitting the MAC by a separate message. In FIG. 4, functions concerning reception are not given. Message processor 30 in FIG. 4 has main message generator 31, CANID extractor 32, data field extractor 33, MAC generation-timing determiner 34, MAC generator 35, and MAC message generator 36.

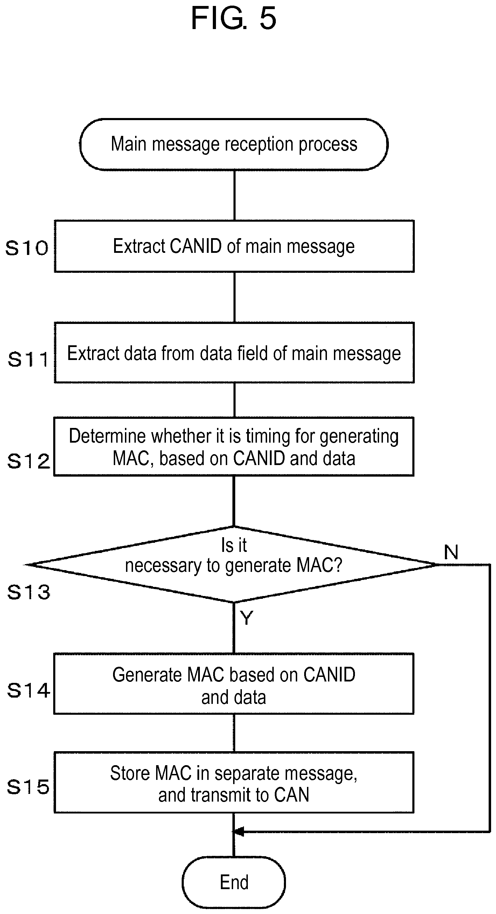

FIG. 5 is a flowchart illustrating a message transmission process performed by message processor 30 in FIG. 4. Main message generator 31 obtains data to be transmitted, from application processor 10, and stores the data into the data field of the CAN message. Main message generator 31 also stores a CANID corresponding to the data, into the ID field. The CANID may be obtained from application processor 10, or may be held in advance. Main message generator 31 determines values of other items of the CAN message, and completes a main message. Main message generator 31 delivers a generated main message to transmitting and receiving unit 50. Transmitting and receiving unit 50 broadcast-transmits the main message.

CANID extractor 32 extracts the CANID from the ID field of the main message generated by main message generator 31 (S10 in FIG. 5). CANID extractor 32 delivers the extracted CANID to MAC generation-timing determiner 34 and MAC generator 35. Data field extractor 33 extracts the data stored in the data field of a main message generated by main message generator 31 (S11). Data field extractor 33 delivers the extracted data to MAC generation-timing determiner 34 and MAC generator 35.

MAC generation-timing determiner 34 determines whether it is a timing for generating the MAC, based on the extracted CANID and data (S12). A concrete example of a determining method will be described later. If it is a MAC-generation-necessary timing (Y in S13), MAC generation-timing determiner 34 instructs MAC generator 35 to generate the MAC. MAC generator 35 generates the MAC, based on the extracted CANID and data (S14). Specifically, MAC generator 35 generates the MAC for an authentication target containing at least the CANID and data, by applying a predetermined MAC algorithm to the authentication target, using common key 35a held by MAC generator 35. MAC generator 35 delivers the generated MAC to MAC message generator 36.

MAC message generator 36 stores the MAC obtained from MAC generator 35 into the data field of the CAN message. Further, MAC message generator 36 stores in the ID field the CANID indicating a message containing the MAC for the data. For example, there may be used a value obtained by subtracting a predetermined fixed value from a value of the CANID indicating a message containing the data itself. MAC message generator 36 determines values of other items of the CAN message, and completes a MAC message. MAC message generator 36 delivers the generated MAC message to transmitting and receiving unit 50, and transmitting and receiving unit 50 broadcast-transmits the MAC message (S15). In step S13, if it is not a MAC-generation-necessary timing (N in S13), the MAC generation/transmission process in step S14 and step S15 is skipped.

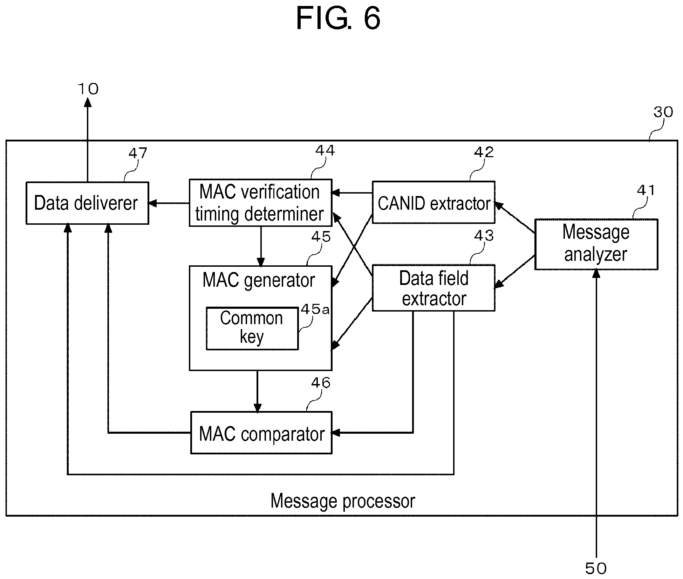

FIG. 6 is a block diagram illustrating functions necessary for reception performed by message processor 30 in the scheme for transmitting the MAC by a separate message. In FIG. 6, functions concerning transmission are not given. Message processor 30 in FIG. 6 has message analyzer 41, CANID extractor 42, data field extractor 43, MAC verification timing determiner 44, MAC generator 45, MAC comparator 46, and data deliverer 47.

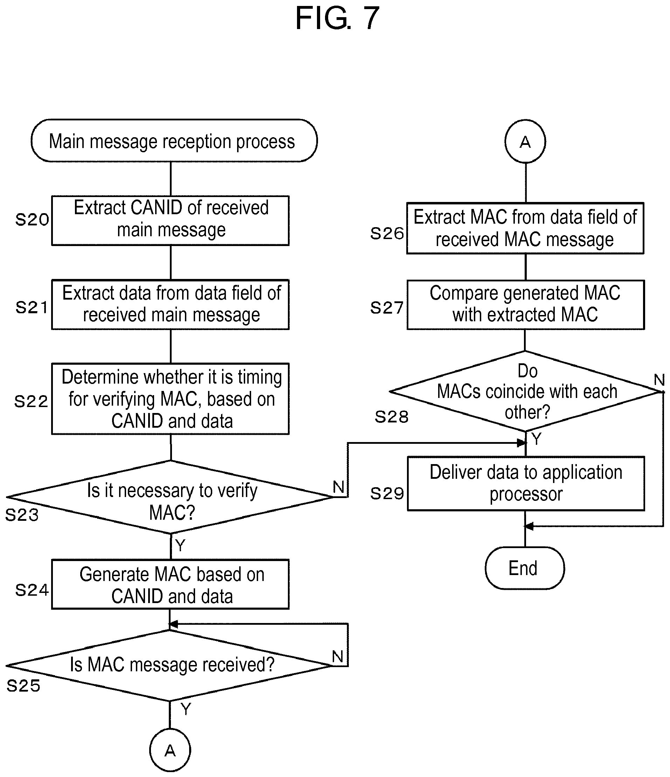

FIG. 7 is a flowchart illustrating a message reception process performed by message processor 30 in FIG. 6. Transmitting and receiving unit 50 receives a main message from CAN bus 200, and delivers the received main message to message analyzer 41. CANID extractor 42 extracts the CANID from the ID field of the main message received by message analyzer 41 (S20 in FIG. 7). CANID extractor 42 delivers the extracted CANID to MAC verification timing determiner 44 and MAC generator 45. Data field extractor 43 extracts the data stored in the data field of a main message received by message analyzer 41 (S21). Data field extractor 43 delivers the extracted data to MAC verification timing determiner 44, MAC generator 45, and data deliverer 47.

MAC verification timing determiner 44 determines whether it is a timing for verifying the MAC, based on the extracted CANID and data (S22). While a concrete example of a determining method will be described later, the same determining method as that of transmission-side MAC generation-timing determiner 34 is used. If it is a MAC-verification-necessary timing (Y in S23), MAC verification timing determiner 44 instructs MAC generator 45 to generate the MAC. MAC generator 45 generates the MAC, based on the extracted CANID and data (S24). A generation method is the same as the generation method in transmission-side MAC generator 35. Reception-side MAC generator 45 holds common key 45a which is the same as common key 35a held by transmission-side MAC generator 35. MAC generator 45 delivers the generated MAC to MAC comparator 46.

ECU 100 waits for an arrival of the MAC message for the main message (N in S25). If the MAC message is received (Y in S25), transmitting and receiving unit 50 receives the MAC message from CAN bus 200, and delivers the received MAC message to message analyzer 41. Data field extractor 43 extracts the MAC stored in the data field of the MAC message received by message analyzer 41 (S26). Data field extractor 43 delivers the extracted MAC to MAC comparator 46.

MAC comparator 46 compares the MAC generated by MAC generator 45 with the MAC extracted by data field extractor 43 (S27). If both MACs coincide with each other (Y in S28), MAC comparator 46 determines that MAC verification is successful, and notifies data deliverer 47 of the successful verification. Data deliverer 47 delivers the data obtained from data field extractor 43 and reserved, to application processor 10 (S29). Application processor 10 controls a control target or monitors a monitoring target, in accordance with obtained data.

In step S28, if the MACs do not coincide with each other (N in S28), MAC comparator 46 determines that MAC verification is unsuccessful, and notifies data deliverer 47 of the unsuccessful verification. Data deliverer 47 does not deliver the data obtained from data field extractor 43 and reserved, to application processor 10. In step S23, if it is not a MAC-verification-necessary timing (N in S23), processes in steps S24 to S28 are skipped. Data deliverer 47 unconditionally delivers the data obtained from data field extractor 43 to application processor 10 (S29).

As illustrated in FIGS. 5 and 6, in the case of transmitting the MAC by a separate message, an attack that an attacker inserts an unauthorized message into between the main message and the MAC message is considered. Hereinafter, a message reception-time process assuming such an abnormal case will be described.

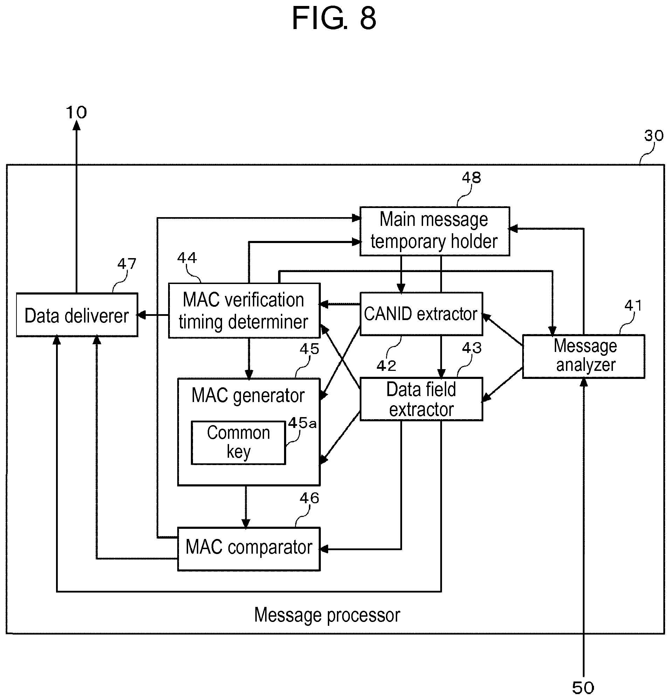

FIG. 8 is a block diagram illustrating functions necessary for reception performed by message processor 30 assuming an abnormal case in the scheme for transmitting the MAC by a separate message. In FIG.8, functions concerning transmission are not given. Message processor 30 in FIG. 8 has a configuration in which main message temporary holder 48 is added to the configuration element of message processor 30 that does not assume the abnormal case in FIG. 6. Main message temporary holder 48 can be realized by a general memory element and the like.

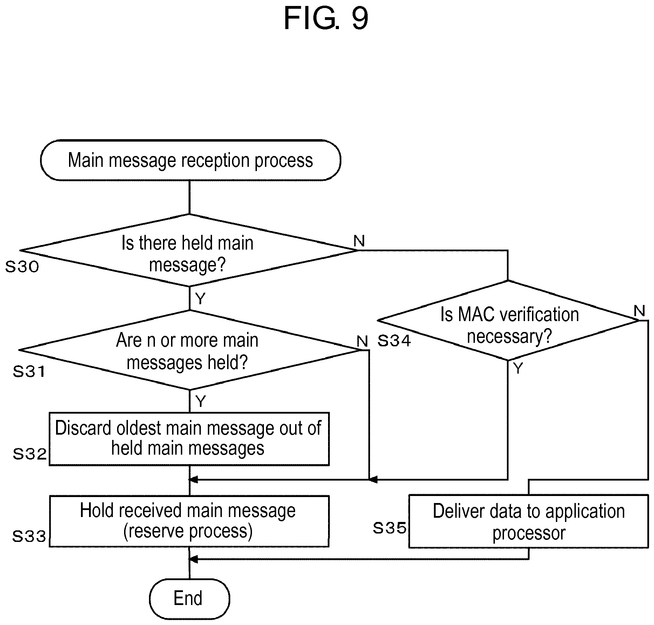

FIG. 9 is a flowchart illustrating a main message reception process performed by message processor 30 in FIG. 8. As a policy of the control, maximum n (about three) main messages are held, and MACs are verified by using MAC messages and the held main messages. When the MAC is rejected (verification is unsuccessful) as a result of the verification, a process for discarding a held message is carried out. When message analyzer 41 receives a main message from CAN bus 200 via transmitting and receiving unit 50, message analyzer 41 determines whether a main message is held in main message temporary holder 48 (S30 in FIG. 9). If the main message is held (Y in S30), message analyzer 41 determines whether the number of main messages held in main message temporary holder 48 is n or more (S31). In this case, n is a parameter that prescribes an upper limit number of main messages held in main message temporary holder 48. For example, n = 3 is set.

If n or more main messages are held (Y in S31), message analyzer 41 discards an oldest main message out of a plurality of main messages held in main message temporary holder 48 (S32). Message analyzer 41 stores a received new main message into main message temporary holder 48 (S33). That is, main message temporary holder 48 is managed in a FIFO (FIRST-IN FIRST-OUT) manner. Processing a main message stored in main message temporary holder 48 is reserved until there is an instruction from message analyzer 41.

In step S31, if the number of main messages held in main message temporary holder 48 is less than n (N in S31), step S32 is skipped, and message analyzer 41 stores the received new main message into main message temporary holder 48 (S33).

In step S30, if a main message is not held in main message temporary holder 48 (N in S30), MAC verification timing determiner 44 determines whether MAC verification for the main message is necessary (S34). A concrete example of the determining method will be described later. If MAC verification is necessary (Y in S34), MAC verification timing determiner 44 notifies message analyzer 41 of the verification necessity. Message analyzer 41 stores a received new main message into main message temporary holder 48 (S33).

In step S34, if MAC verification is not necessary (N in S34), data deliverer 47 delivers the data obtained from data field extractor 43 to application processor 10 (S35). Application processor 10 controls the control target, or monitors the monitoring target, in accordance with the obtained data.

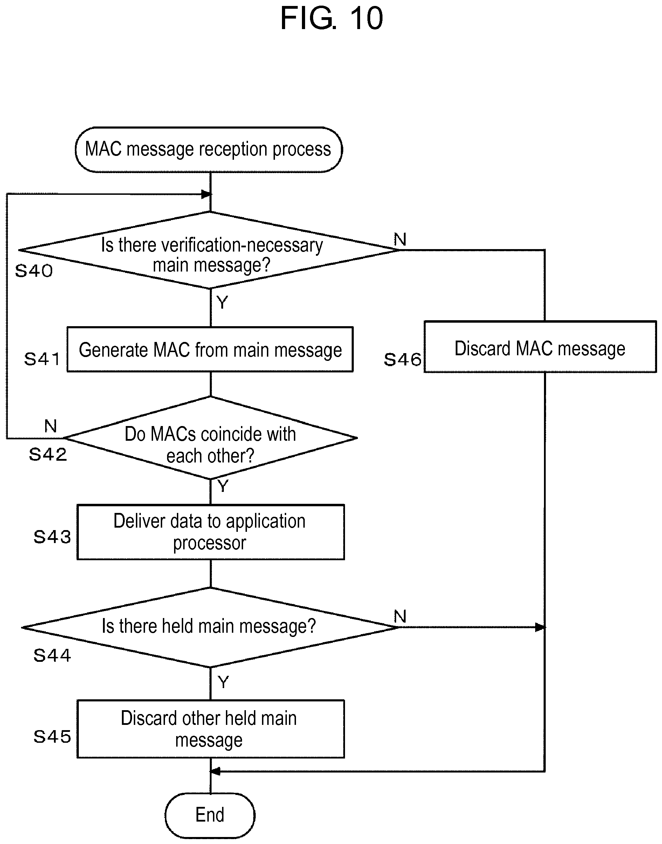

FIG. 10 is a flowchart illustrating a MAC message reception process performed by message processor 30 in FIG. 8. When message analyzer 41 receives the MAC message from CAN bus 200 via transmitting and receiving unit 50, message analyzer 41 determines whether a verification-necessary main message is held in main message temporary holder 48 (S40 in FIG. 10). If the main message is held (Y in S40), the MAC is generated from the main message (S41). Specifically, the MAC is generated based on the CANID and the data of the main message.

MAC comparator 46 compares the MAC generated from the main message with the MAC extracted from a received MAC message (S42). If both MACs coincide with each other (Y in S42), data deliverer 47 delivers the data obtained from data field extractor 43 to application processor 10 (S43). Application processor 10 controls the control target, or monitors the monitoring target, in accordance with the obtained data in accordance with the obtained data.

In the case of the successful verification determined by MAC comparator 46, if other main messages are held in main message temporary holder 48 (Y in S44), the held other main messages are discarded (S45). If other main messages are not held (N in S44), the process in step S45 is skipped.

In step S42, if the MACs do not coincide with each other (N in S42), the process shifts to step S40, and a determination about whether a verification-necessary main message is held is repeated.

In step S40, if a verification-necessary main message is not held in main message temporary holder 48 (N in S40), message analyzer 41 discards the received MAC message (S46).

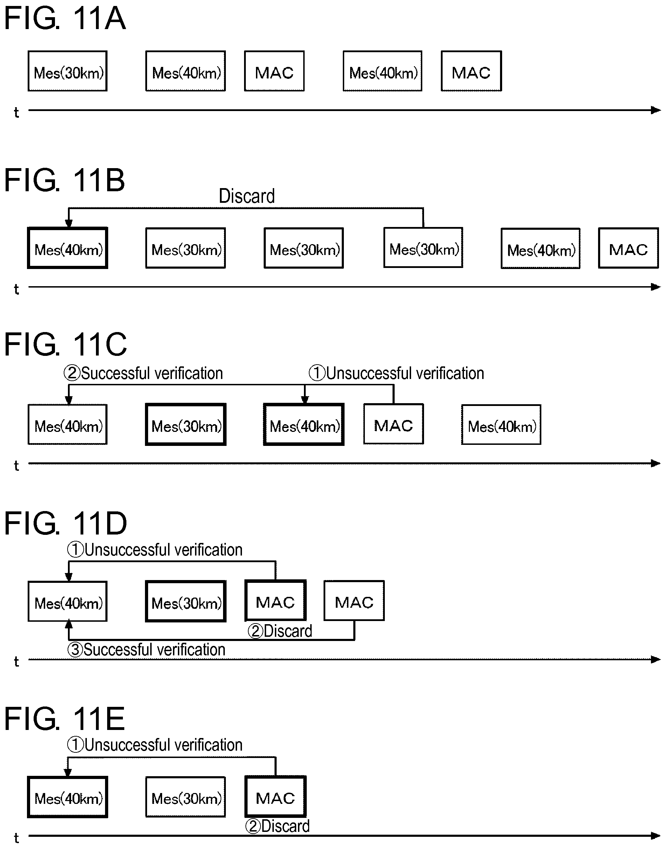

FIG. 11A is a diagram illustrating a normal case, and FIGS. 11B to 11E illustrates attack examples of inserting an unauthorized message into between an authorized main message and an authorized MAC message. FIGS. 11A to 11E illustrate examples that a main message containing vehicle speed information in the data field as a control value is transmitted from an ECU connected to a vehicle speed sensor. Further, the transmission examples are based on an assumption that the MAC message is generated/transmitted at the time of transmitting a main message containing a vehicle speed different from a vehicle speed contained in a main message transmitted last time. That is, when the vehicle speed contained in the main message transmitted last time is the same as the vehicle speed contained in the main message transmitted this time, the MAC message is not generated/transmitted. A message immediately before a header main message in each of FIGS. 11A to 11E is assumed to be a main message containing a vehicle speed = 30 km/h as a control value. Further, an upper limit number n of a main message held in main message temporary holder 48 is assumed to be 3. In FIGS. 11A to 11E, an unauthorized message is encircled by a thick frame.

In the case illustrated in FIG. 11A, an unauthorized message is not inserted. The MAC message is added to each of a second main message and a third main message that contain a vehicle speed different from a vehicle speed contained in a last-time main message. Because the header main message is the message containing the vehicle speed (= 30 km/h) which is the same as the vehicle speed contained in the last-time main message, the MAC message is not added to the header main message.

FIG. 11B illustrates an example of attack pattern 1. The header main message is an unauthorized main message. A vehicle speed (= 40 km/h) contained in this main message (unauthorized) is different from the vehicle speed (= 30 km/h) contained in the last-time main message (authorized). Therefore, this main message corresponds to the MAC-verification necessary main message in step S34 in FIG. 9. Therefore, because this main message corresponds to the MAC-verification-necessary main message in step S34 in FIG. 9, this main message is stored in main message temporary holder 48. Because the second and third main messages (authorized) satisfy the condition already held in main message temporary holder 48 in step S30 in FIG. 9, the second and third main messages (authorized) are stored in main message temporary holder 48.

At a reception time point of a fourth main message (authorized), already three main messages are held in main message temporary holder 48. Therefore, the oldest header main message (unauthorized) is discarded by step S32 in FIG. 9.

FIG. 11C illustrates an example of attack pattern 2. Because the header main message (authorized) satisfies the condition in step S34 in FIG. 9, the header main message (authorized) is stored in main message temporary holder 48. Because the second and third main messages (unauthorized) satisfy the condition in step S30 in FIG. 9, the second and third main messages (unauthorized) are also stored in main message temporary holder 48. The MAC message (authorized) is received next to the third main message (authorized). Out of the three main messages held in main message temporary holder 48, a verification-necessary main message in step S40 in FIG. 10 corresponds to a header main message (authorized) and the third main message (unauthorized). Because a vehicle speed (= 40 km/h) contained in the second main message (unauthorized) is different from a vehicle speed (= 30 km/h) contained in the last-time main message (authorized), the second main message (unauthorized) does not correspond to a verification-necessary main message.

When main message temporary holder 48 holds a plurality of verification-necessary main messages, the main messages are verified starting from a new main message. In this example, verification is started from the third main message (unauthorized). The MAC generated from the third main message (unauthorized) does not coincide with the MAC contained in the received MAC message (authorized). Next, header main message (authorized) is verified. The MAC generated from the header main message (authorized) coincides with the MAC contained in the received MAC message (authorized). Therefore, the header main message (authorized) is delivered to application processor 10. In step S45 in FIG. 10, the second main message (unauthorized) and the third main message (unauthorized) are discarded.

Further, generating the MAC of a main message prior to the reception of the MAC message is also considered. However, when a large amount of unauthorized main messages are transmitted, the load of ECU 100 due to generation of MACs of the main messages increases. In the present exemplary embodiment, after the reception of the MAC message, verification is carried out by sequentially generating MACs starting from a new main message. At a detection time point of a verification-successful main message, the remaining main messages are discarded. Accordingly, the increase in the load of ECU 100 can be suppressed.

FIG. 11D illustrates an example of attack pattern 3. Because the header main message (authorized) satisfies the condition in step S34 in FIG. 9, the header main message (authorized) is stored in main message temporary holder 48. Because the second main message (unauthorized) satisfies the condition in step S30 in FIG. 9, the second main message (unauthorized) is also stored in main message temporary holder 48. Next, the MAC message (unauthorized) is received.

Out of the two main messages held in main message temporary holder 48, a verification-necessary main message in step S40 in FIG. 10 corresponds to the header main message (authorized). The second main message (unauthorized) does not correspond to a verification-necessary main message. The MAC generated from the header main message (authorized) does not coincide with the MAC contained in the received MAC message (unauthorized). Accordingly, because a verification-necessary main message does not exist in main message temporary holder 48, the MAC message (unauthorized) is discarded in step S46 in FIG. 10. In this way, the second main message (unauthorized) and the MAC message (unauthorized) are not verified, and the MAC message (unauthorized) is discarded.

Next, the MAC message (authorized) is further received. The MAC generated from the header main message (authorized) coincides with the MAC contained in the MAC message (unauthorized) received this time. Therefore, the header main message (authorized) is delivered to application processor 10. In step S45 in FIG. 10, the second main message (unauthorized) in main message temporary holder 48 is discarded.

FIG. 11E illustrates an example of attack pattern 4. Because the header main message (unauthorized) satisfies the condition in step S34 in FIG. 9, the header main message (unauthorized) is stored in main message temporary holder 48. Because the second main message (authorized) satisfies the condition in step S30 in FIG. 9, the second main message (authorized) is also stored in main message temporary holder 48. Next, the MAC message (unauthorized) is received.

Out of the two main messages held in main message temporary holder 48, a verification-necessary main message in step S40 in FIG. 10 corresponds to the header main message (unauthorized). The second main message (authorized) does not correspond to a verification-necessary main message. The MAC generated from the header main message (unauthorized) does not coincide with the MAC contained in the received MAC message (unauthorized). Accordingly, because a verification-necessary main message does not exist in main message temporary holder 48, the MAC message (unauthorized) is discarded in step S46 in FIG. 10.

Against the attack of inserting the unauthorized message into between the authorized main message and the authorized MAC message, setting the priority of the MAC message higher than the priority of the main message is effective. This can be realized by setting the CANID of each message so that the CANID of the MAC message becomes always smaller than the CANID of the main message. The reason is that in the CAN, as described above, when a plurality of messages are transmitted simultaneously, a message having a smaller value of the CANID is prioritized by communication arbitration. By setting the priority of the MAC message higher than the priority of a main message, it is possible to lower the probability of inserting a large amount of unauthorized messages into between the authorized main message and the authorized MAC message.

So far, the description has been given of a scheme, in which when the MAC-verification-necessary main message is received, the data contained in the main message in data deliverer 47 is reserved until the MAC message corresponding to the main message is received. Even when data deliverer 47 has received the MAC-verification-necessary main message, a scheme for data deliverer 47 to instantly deliver data contained in the main message to application processor 10 can be also employed. In this scheme, after receiving the MAC-verification-necessary main message, when data deliverer 47 cannot receive the MAC message corresponding to the main message within a predetermined set time, data deliverer 47 instructs application processor 10 to return the control state to a state before the data contained in the main message is delivered. This scheme is desirable for application to a control which does not relatively affect safety of the vehicle.

Data deliverer 47 may instruct application processor 10 to shift to a fail-safe mode, instead of instructing application processor 10 to return the control state to a state before the data contained in the main message is delivered.

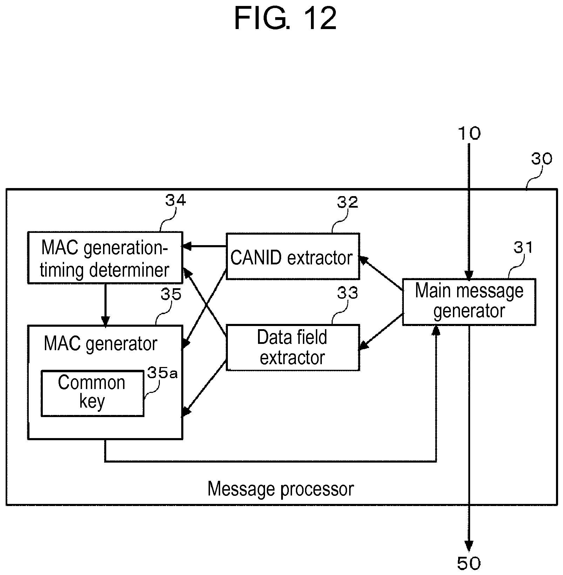

FIG. 12 is a block diagram illustrating functions necessary for transmission performed by message processor 30 in a scheme for transmitting the MAC by the same message. In FIG. 12, functions concerning reception are not given. A configuration of Message processor 30 in FIG. 12 is a configuration in which MAC message generator 36 is omitted from the configuration of message processor 30 in FIG. 4.

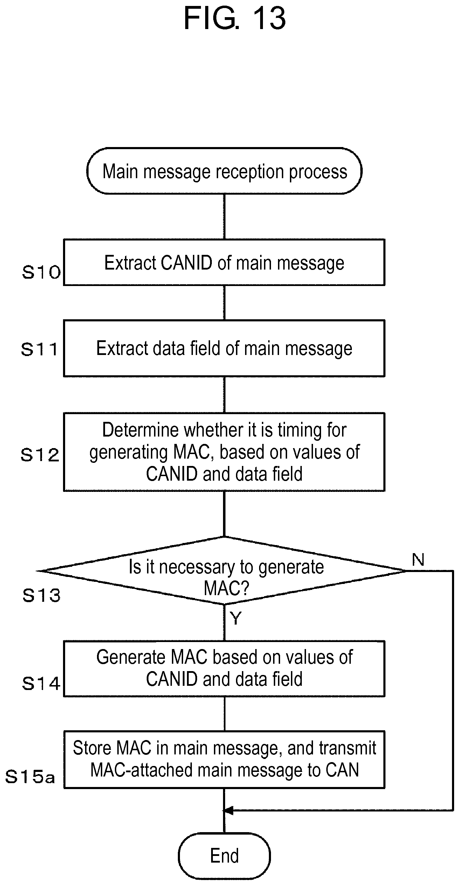

FIG. 13 is a flowchart illustrating a message transmission process performed by message processor 30 in FIG. 12. Processes in steps S10 to S14 in FIG. 13 are the same as the processes in steps S10 to S14 in FIG. 5. Main message generator 31 stores the MAC obtained from MAC generator 35, into the data field of the main message so that the MAC does not become duplicate with the data already stored. Further, Main message generator 31 stores into the ID field The CANID indicating the MAC-attached Main message containing the data and the MAC for the data. Main message generator 31 delivers the generated MAC-attached main message to transmitting and receiving unit 50, and Transmitting and receiving unit 50 broadcast-transmits the MAC-attached main message (S15a).

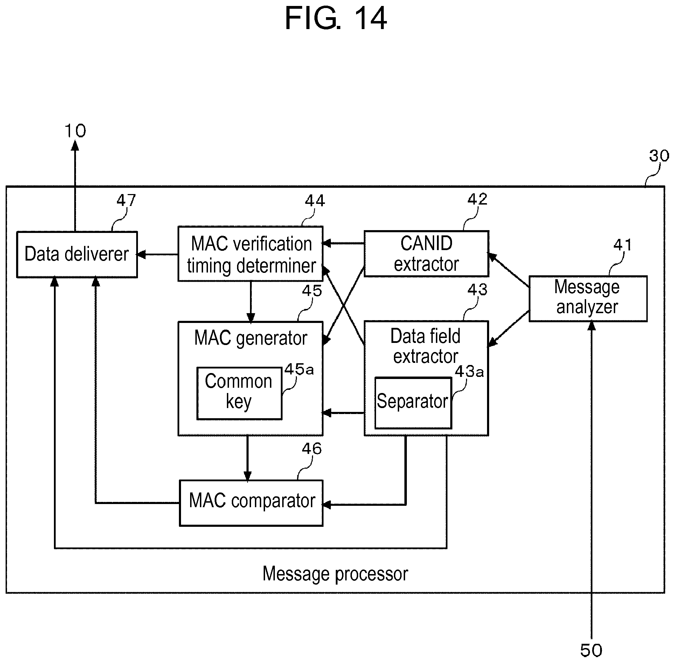

FIG. 14 is a block diagram illustrating functions necessary for reception performed by message processor 30 in the scheme for transmitting the MAC by the same message. In FIG. 14, functions concerning transmission are not given. Message processor 30 in FIG. 14 is the same as message processor 30 in FIG. 6 except that data field extractor 43 includes separator 43a.

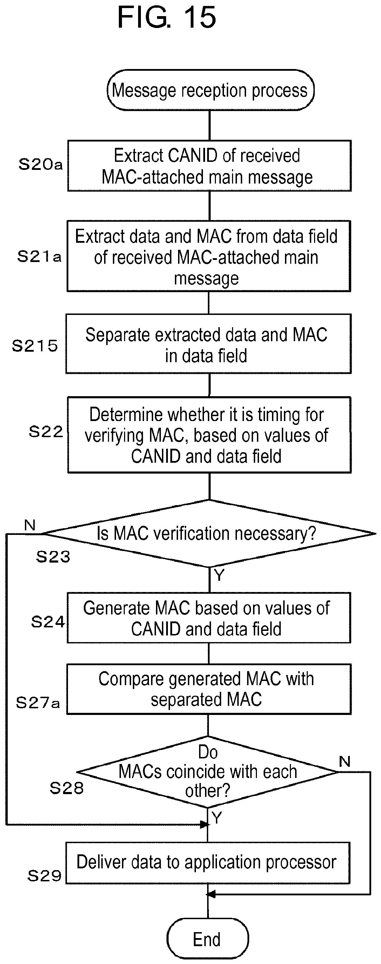

FIG. 15 is a flowchart illustrating a message reception process performed by message processor 30 in FIG. 14. Transmitting and receiving unit 50 receives the MAC-attached main message from CAN bus 200, and delivers the MAC-attached main message to message analyzer 41. CANID extractor 42 extracts the CANID from the ID field of the MAC-attached main message received by message analyzer 41 (S20a in FIG. 15). Data field extractor 43 extracts the data and the MAC in the data field of the MAC-attached main message received by message analyzer 41 (S21a). Data field extractor 43 separates the extracted data and MAC in the data field (S215).

MAC verification timing determiner 44 determines whether it is a timing for verifying the MAC, based on the extracted CANID and data (S22). If it is a MAC-verification-necessary timing (Y in S23), MAC generator 45 generates the MAC, based on the extracted CANID and data (S24). MAC comparator 46 compares the MAC generated by MAC generator 45 with the MAC extracted and separated by data field extractor 43 (S27a). If both MACs coincide with each other (Y in S28), MAC comparator 46 determines that MAC verification is successful, and notifies data deliverer 47 of the successful verification. Data deliverer 47 delivers the data obtained from data field extractor 43 and reserved, to application processor 10 (S29). Application processor 10 controls the control target, or monitors the monitoring target, in accordance with the obtained data.

In step S28, if the MACs do not coincide with each other (N in S28), MAC comparator 46 determines that MAC verification is unsuccessful, and notifies data deliverer 47 of the unsuccessful verification. Data deliverer 47 doe not deliver the data obtained from data field extractor 43 and reserved, to application processor 10. In step S23, If it is not a MAC-verification-necessary timing (N in S23), processes in step S24, step S27a, and step S28 are skipped, and data deliverer 47 unconditionally delivers the data obtained from data field extractor 43 to application processor 10 (S29).

The above-described scheme for transmitting the MAC by the same message is effective when the quantity of ordinary data to be transmitted is small. The scheme for transmitting the MAC by the same message has basically an effect of decreasing the number of messages, as compared with the scheme for transmitting the MAC by a separate message. However, when the amount of the ordinary data is large, it becomes difficult to make the ordinary data and the MAC coexist in the 64-bit data field. In this case, at least one of the ordinary data and the MAC needs to be divided into a plurality of pieces, and accordingly, the number of messages increases. Further, the scheme for transmitting the MAC by a separate message usually facilitates simplification of the process of message processor 30. Therefore, the scheme for transmitting the MAC by the same message is not necessarily more advantageous than the scheme for transmitting the MAC by a separate message. Accordingly, both schemes are preferably set according to an application by considering the amount of the ordinary data and the like.

Hereinafter, the MAC message generation/transmission timing will be described. Each ECU 100 receives a message containing ordinary data, and executes a specific control by using a value indicated by the ordinary data. As described above, reception-side ECU 100 also determines a timing for adding the MAC, like transmission-side ECU 100. Reception-side ECU 100 reserves the control as long as verification of an arrived authorized MAC is not successful. Accordingly, unauthorized control from the attacker is prevented.

While there are various kinds of ordinary data transmitted via the CAN in the vehicle, there is also a large amount of ordinary data to be cyclically transmitted even when a value to be transmitted does not change. For example, vehicle speed information is cyclically transmitted from ECU 100 of a vehicle speed sensor.

In view of the above situation, a control scheme for generating/transmitting a MAC only when a value to be transmitted changes is considered. In this case, the load of ECU 100 and CAN bus 200 can be lowered while ensuring security. Hereinafter, a description will be given of a method for determining the MAC generation/transmission timing in accordance with an own feature or characteristic of the ordinary data to be transmitted or importance and the like of the ordinary data to be transmitted.

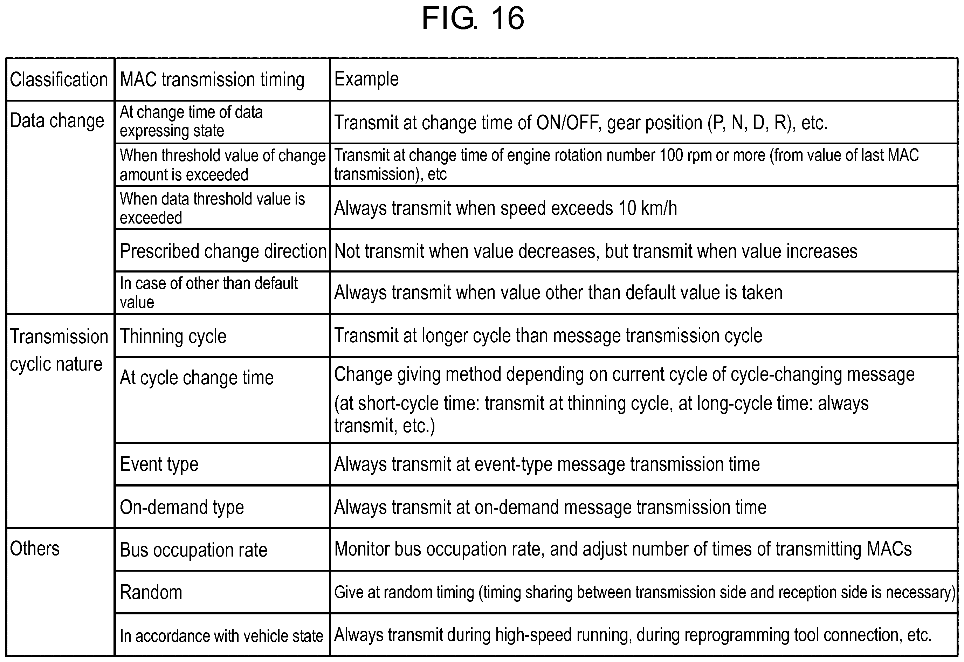

FIG. 16 is a diagram illustrating a list of a plurality of concrete examples of MAC generation/transmission timings. First, as a broad classification, generation/transmission timings are classified into a group for determining a timing due to a data change, a group for determining a timing due to a transmission cyclic nature, and the other group.

First, as a first example of the group for determining a timing due to a data change, a description will be given of a scheme for generating/transmitting a MAC when data expressing a state of the control target or the monitoring target has changed. For example, when ON/OFF of the door lock has changed, the MAC is generated/transmitted. Further, when the gear position (P, N, D, R) has changed, the MAC is generated/transmitted. In this way, the state of the control target or the monitoring target is expressed by a binary value and is expressed by a multiple value, depending on the case. Further, the state of the control target or the monitoring target may be expressed by a more detailed value like the engine rotation number. Data having the same value as that of the last-time data can be said to be data of low importance. Even when the data is unauthorized data, an influence given to the control is small. Therefore, generation/transmission of the MAC for the data is omitted by prioritizing a load decrease.

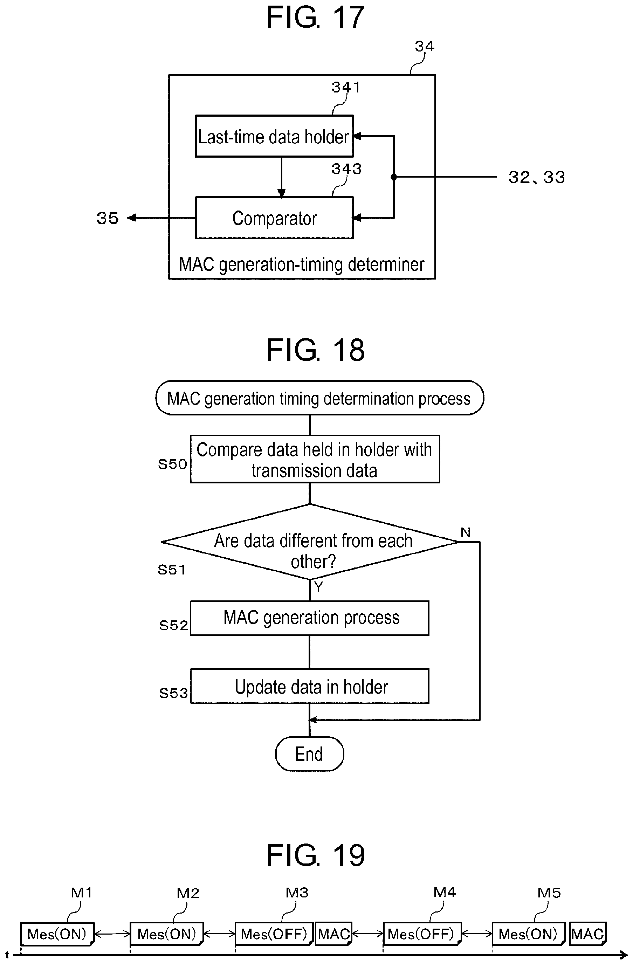

FIG. 17 is a block diagram illustrating functions necessary for MAC generation-timing determiner 34 of message processor 30 in a scheme for generating/transmitting a MAC when data expressing a state has changed. MAC generation-timing determiner 34 in FIG. 17 includes last-time data holder 341 and comparator 343.

FIG. 18 is a flowchart illustrating a process for determining the MAC generation timing by MAC generation-timing determiner 34 in FIG. 17. Last-time data holder 341 holds the data transmitted by the last-time main message. Comparator 343 compares the data held in last-time data holder 341 with the data delivered from data field extractor 33 and to be transmitted this time (S50). If both data are different from each other (Y in S51), comparator 343 instructs MAC generator 35 to generate the MAC. MAC generator 35 generates the MAC, based on the CANID and data extracted by CANID extractor 32 and data field extractor 33 (S52). The data held in last-time data holder 341 is updated to the data transmitted this time (S53). In step S51, if both data coincide with each other (N in S51), the processes in step S52 and step S53 are skipped.

FIG. 19 is a diagram illustrating a concrete example of a scheme for generating/transmitting a MAC when data expressing a state has changed. FIG. 19 illustrates an example of transmitting data expressing a state of a binary value (ON/OFF). Because a value (ON) of data contained in second main message M2 does not change from a value (ON) of data contained in header main message M1, the MAC for second main message M2 is not generated. Because a value (OFF) of data contained in third main message M3 has changed from a value (ON) of data contained in second main message M2, the MAC for third main message M3 is generated/transmitted. Similarly, the MAC for fourth main message M4 is not generated, and the MAC for fifth main message M5 is generated/transmitted.

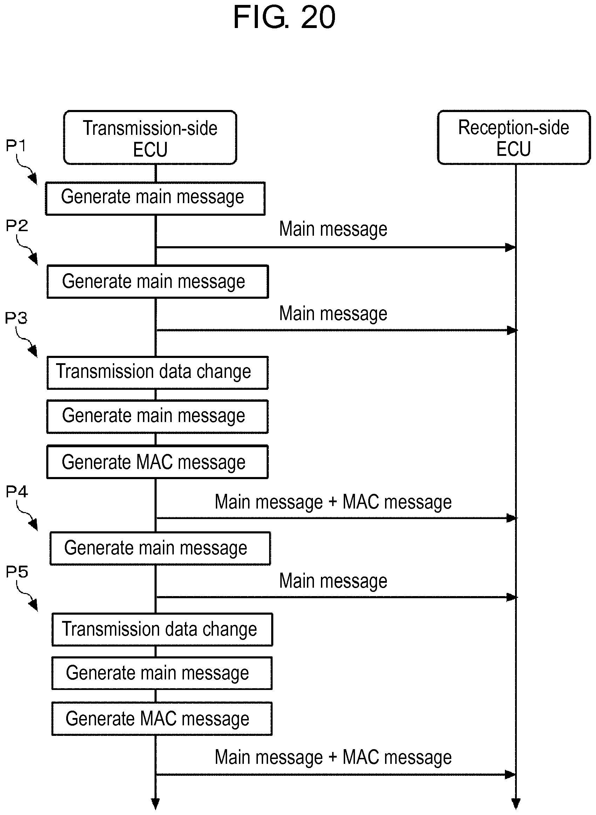

FIG. 20 is a diagram illustrating an example of a message transmitted from transmission-side ECU 100 to reception-side ECU 100, in a scheme for generating/transmitting a MAC when data expressing a state has changed. In first phase P1, second phase P2, and fourth phase P4 where the value of data to be transmitted does not change, transmission-side ECU 100 generates only a main message, and transmits the main message to reception-side ECU 100.

In third phase P3 and fifth phase P5 where the value of data to be transmitted changes, transmission-side ECU 100 generates a main message and the MAC message for the main message. Both the main message and the MAC message are transmitted from transmission-side ECU 100 to reception-side ECU 100.

Next, as a second example of the group for determining a timing due to a data change, a description will be given of a scheme for generating/transmitting a MAC when a change amount of a value expressed by data has exceeded a threshold value. The MAC is generated/transmitted when the engine rotation number has exceeded 100 rpm from a value of the engine rotation number at the last generation/transmission time of the MAC. Data having a small change amount of a value expressed by the data can be said to be data of low importance. Even when the data is unauthorized data, an influence given to the control is small. Therefore, generation/transmission of the MAC for the data is omitted by prioritizing a load decrease.

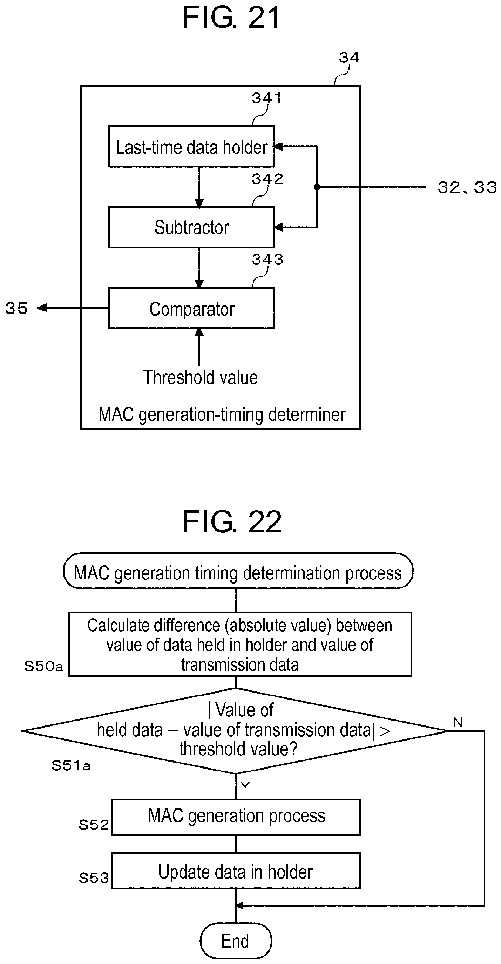

FIG. 21 is a block diagram illustrating functions necessary for MAC generation-timing determiner 34 of message processor 30 in a scheme for generating/transmitting a MAC when a change amount has exceeded a threshold value. MAC generation-timing determiner 34 in FIG. 21 includes last-time data holder 341, subtractor 342, and comparator 343.

FIG. 22 is a flowchart illustrating a process for determining the MAC generation timing by MAC generation-timing determiner 34 in FIG. 21. Last-time data holder 341 holds the value of data transmitted by main message when MAC message is generated last time (MAC-message-generated main message). Subtractor 342 calculates a difference value between the data held in last-time data holder 341 and the value of the data delivered from data field extractor 33 and to be transmitted this time (S50a). In this example, the difference value is calculated in an absolute value. Comparator 343 compares the calculated difference value with a threshold value. If the difference value exceeds the threshold value (Y in S51a), comparator 343 instructs MAC generator 35 to generates the MAC. MAC generator 35 generates the MAC, based on the CANID and data extracted by CANID extractor 32 and data field extractor 33 (S52). The data held in last-time data holder 341 is updated to the data transmitted this time (S53). In step S51a, if the difference value is equal to or lower than the threshold value (N in S51a), the processes in step S52 and step S53 are skipped.

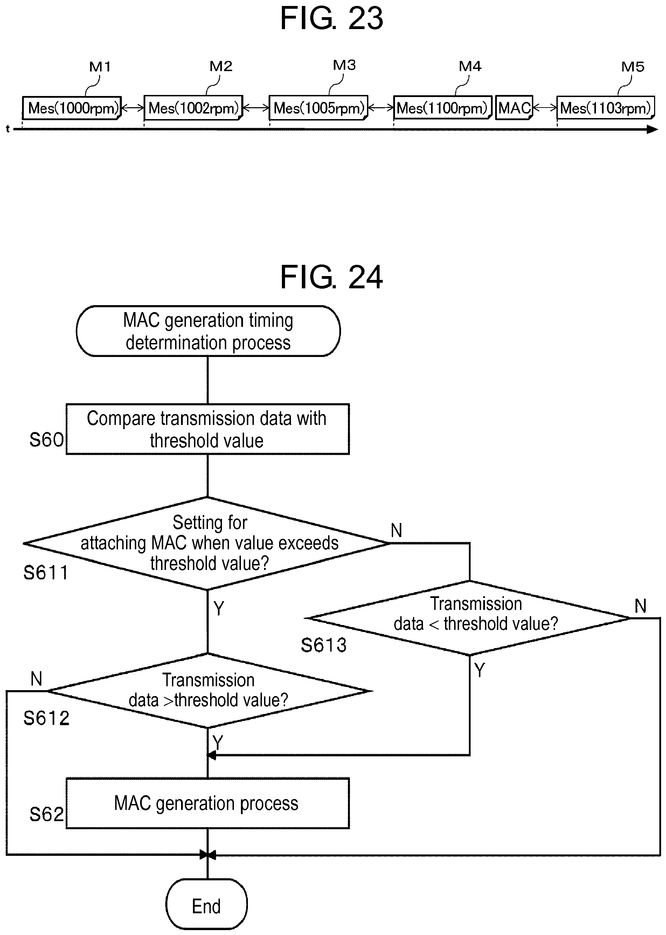

FIG. 23 is a diagram illustrating a concrete example of a scheme for generating/transmitting a MAC when a change amount has exceeded a threshold value. FIG. 23 illustrates an example of transmitting data expressing an engine rotation number. This example is based on the assumption that the engine rotation number contained in the main message (not illustrated) transmitted immediately before header main message M1 is 999 rpm and that the MAC message for the main message is generated/transmitted. The above threshold value is assumed as 100 rpm.

An absolute value of a difference between the engine rotation number (999 rpm) transmitted last time by the MAC-message-generated main message and the engine rotation number (1000 rpm) contained in header main message M1 is not more than 100 rpm. Similarly, an absolute value of a difference between the engine rotation number (999 rpm) transmitted last time by the MAC-message-generated main message and the engine rotation number (1002 rpm) contained in second main message M2 is also not more than 100 rpm. Similarly, an absolute value of a difference between the engine rotation number (999 rpm) transmitted last time by the MAC-message-generated main message and the engine rotation number (1005 rpm) contained in third main message M3 is also not more than 100 rpm. Therefore, MAC messages for header main message M1, second main message M2, and the third main message are not generated/transmitted.

An absolute value of a difference between the engine rotation number (999 rpm) transmitted last time by the MAC-message-generated main message and the engine rotation number (1100 rpm) contained in fourth main message M4 exceeds 100 rpm. Therefore, the MAC message for fourth main message M4 is generated/transmitted. Accordingly, the engine rotation number transmitted last time by the MAC-message-generated main message is updated to 1100 rpm.

An absolute value of a difference between the engine rotation number (1100 rpm) transmitted last time by MAC-message-generated fourth main message M4 and the engine rotation number (1103 rpm) contained in fifth main message M5 is not more than 100 rpm. Therefore, the MAC message for fifth main message M5 is not generated/transmitted.

In the examples illustrated in FIGS. 21 to 23, a value of the data transmitted last time by the MAC-message-generated main message is used for the value of the data transmitted last time. However, regardless of generation of the MAC message, a value of the data contained in the main message transmitted last time may be used.

Next, as a third example of the group for determining a timing due to a data change, a description will be given of a scheme for generating/transmitting a MAC when a value expressed by data exceeds or falls below a threshold value. For example, when the vehicle speed exceeds10 km/h, the MAC is always generated/transmitted. Further, when a power supply voltage of the battery falls below a predetermined value, for example, the MAC is always generated/transmitted. Data having a value exceeding or falling below a threshold value can be said to be data of high importance. Therefore, the MAC is generated/transmitted for the data while giving priority to ensuring security.

In the scheme for generating/transmitting a MAC when the value exceeds or falls below the threshold value, the function necessary for MAC generation-timing determiner 34 of message processor 30 is sufficient if it has comparator 343 of MAC generation-timing determiner 34 in FIG. 21. In this scheme, because values of data transmitted in the past are unnecessary, last-time data holder 341 and subtractor 342 do not need to be provided.

FIG. 24 is a flowchart illustrating a process for determining a MAC generation timing by MAC generation-timing determiner 34, in a scheme for generating/transmitting a MAC when a value exceeds or falls below a threshold value. Comparator 343 compares the value of the data delivered from data field extractor 33 and to be transmitted this time with a threshold value (S60). In the case of a setting that the MAC is generated/transmitted when a value exceeds a threshold value (Y in S611), the process shifts to step S612. In the case of a setting that the MAC is generated/transmitted when a value falls below a threshold value (N in S611), the process shifts to step S613.

In step S612, if the value of the data to be transmitted this time exceeds the threshold value (Y in S612), comparator 343 instructs MAC generator 35 to generate the MAC. MAC generator 35 generates the MAC, based on the CANID and data extracted by CANID extractor 32 and data field extractor 33 (S62). In step S612, if the value of the data to be transmitted this time is equal to or smaller than the threshold value (N in S612), the process in step S62 is skipped.

In step S613, if the value of the data to be transmitted this time falls below the threshold value (Y in S613), comparator 343 instructs MAC generator 35 to generate the MAC. MAC generator 35 generates the MAC, based on the CANID and data extracted by CANID extractor 32 and data field extractor 33 (S62). In step S613, if the value of the data to be transmitted this time is equal to or larger than the threshold value (N in S613), the process in step S62 is skipped.

Next, as a fourth example of the group for determining a timing due to a data change, a description will be given of a scheme for generating/transmitting a MAC when a change of a value expressed by data is a change in a prescribed direction. When the value of the data decreases, For example, the MAC is not generated/transmitted, and when the value of the data increases, for example, the MAC is generated/transmitted. This example expresses that a change of the value of data in a decreasing direction is a change to a safe side and that a change of the value of data in an increasing direction is a change to a risk side. By generating/transmitting the MAC for only the data whose value changes in a direction of the risk side, it is to possible to take balance between the ensuring of security and a load decrease.

In the scheme for generating/transmitting a MAC when a change of a value is a change in a prescribed direction, the function necessary for MAC generation-timing determiner 34 of message processor 30 is the same as the function of MAC generation-timing determiner 34 in FIG. 17.

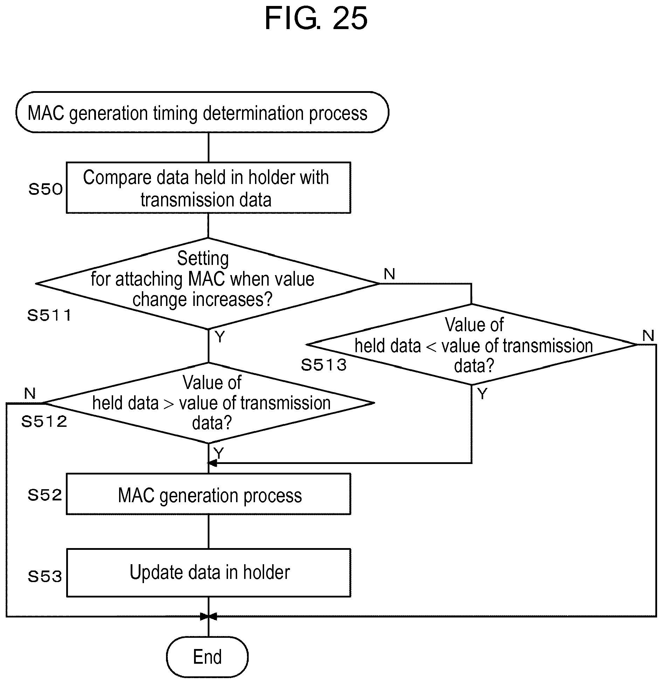

FIG. 25 is a flowchart illustrating a process for determining the MAC generation timing by MAC generation-timing determiner 34, in a scheme for generating/transmitting a MAC when a change of a value is a change in a prescribed direction. Last-time data holder 341 holds the value of the data transmitted by the last-time main message. Comparator 343 compares the value of the data held in last-time data holder 341 with the value of the data delivered from data field extractor 33 and to be transmitted this time (S50). In the case of a setting that the MAC is generated/transmitted when a change of a value is a change in an increasing direction (Y in S511), the process shifts to step S512. In the case of a setting that the MAC is generated/transmitted when a change of a value is a change in a decreasing direction (N in S511), the process shifts to step S513.

In step S512, if the value of the held data exceeds the value of the data to be transmitted this time (Y in S512), comparator 343 instructs MAC generator 35 to generate the MAC. MAC generator 35 generates the MAC, based on the CANID and data extracted by CANID extractor 32 and data field extractor 33 (S52). The data held in last-time data holder 341 is updated to the data transmitted this time (S53). In step S512, if the value of the held data is equal to or lower than the value of the data to be transmitted this time (N in S512), the processes in step S52 and step S53 are skipped.

In step S513, if the value of the held data is equal to or lower than the value of the data to be transmitted this time (Y in S513), comparator 343 instructs MAC generator 35 to generate the MAC. MAC generator 35 generates the MAC, based on the CANID and data extracted by CANID extractor 32 and data field extractor 33 (S52). The data held in last-time data holder 341 is updated to the data transmitted this time (S53). In step S513, if the value of the held data exceeds the value of the data to be transmitted this time (N in S513), the processes in step S52 and step S53 are skipped.

Next, as a fifth example of the group for determining a timing due to a data change, a description will be given of a scheme for generating/transmitting a MAC when a value expressed by data is different from a default value. For example, when a value of data takes other than the default value, the MAC is always generated/transmitted. Ordinarily, the default value is set to a safest side value. Therefore, when the value of data takes the default value, generation/transmission of the MAC for the data is omitted while giving priority to a load decrease.

In the scheme for generating/transmitting a MAC when a value is different from the default value, the function necessary for MAC generation-timing determiner 34 of message processor 30 is sufficient if it has comparator 343 of MAC generation-timing determiner 34 in FIG. 21. In this scheme, because values of data transmitted in the past are unnecessary, last-time data holder 341 and subtractor 342 do not need to be provided. The default value, not the threshold value, is input to comparator 343.

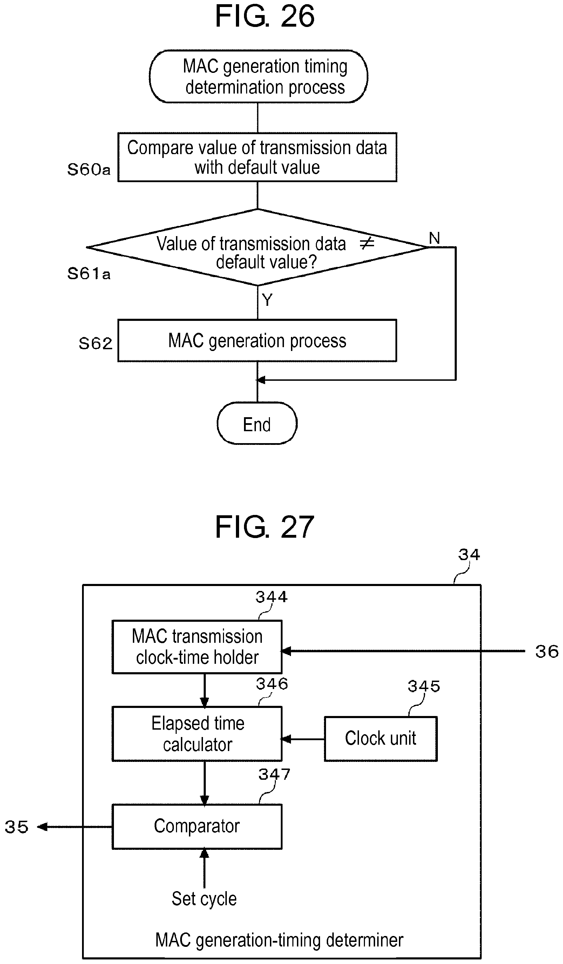

FIG. 26 is a flowchart illustrating a process for determining the MAC generation timing by MAC generation-timing determiner 34, in a scheme for generating/transmitting a MAC when a value is different from a default value. Comparator 343 compares the value of data delivered from data field extractor 33 and to be transmitted this time with a default value (S60a). If the value of data to be transmitted this time is different from the default value (Y in S61a), comparator 343 instructs MAC generator 35 to generate the MAC. MAC generator 35 generates the MAC, based on the CANID and data extracted by CANID extractor 32 and data field extractor 33 (S62). In step S61a, if the value of the data to be transmitted this time is the same as the default value (N in S61a), the process in step S62 is skipped.

Next, as a first example of the group for determining a timing due to a transmission cyclic nature, a description will be given of a scheme for generating/transmitting a MAC by the thinning cycle. The MAC is generated/transmitted at a longer cycle than the transmission cycle of a main message, for example. The number of MAC generation/transmission times can be simply decreased.

FIG. 27 is a block diagram illustrating functions necessary for MAC generation-timing determiner 34 of message processor 30 in a scheme for generating/transmitting a MAC by the thinning cycle. MAC generation-timing determiner 34 in FIG. 27 includes MAC transmission clock-time holder 344, clock unit 345, elapsed time calculator 346, and comparator 347.

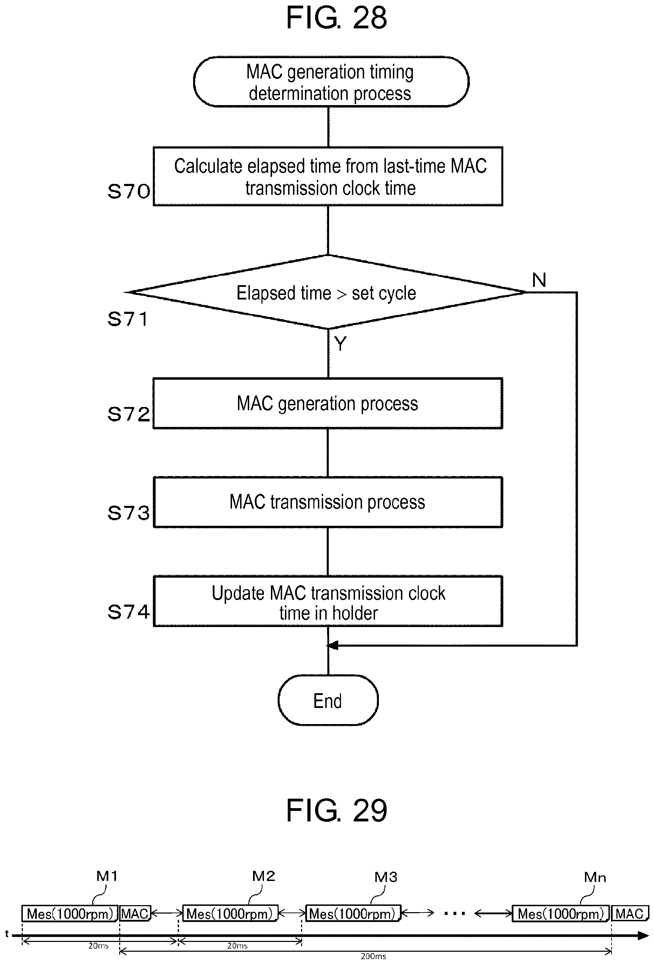

FIG. 28 is a flowchart illustrating a process for determining the MAC generation timing by MAC generation-timing determiner 34 in FIG. 27. MAC transmission clock-time holder 344 holds a last-time transmission clock time of the MAC message. Elapsed time calculator 346 calculates elapsed time from a last transmission clock time of the MAC message, based on the last-time transmission clock time of the MAC message held in MAC transmission clock-time holder 344 and a current clock time supplied from clock unit 345 (S70). Comparator 347 compares the calculated elapsed time with a set cycle (S71). If the calculated elapsed time exceeds the set cycle (Y in S71), comparator 347 instructs MAC generator 35 to generate the MAC. MAC generator 35 generates the MAC, based on the CANID and data extracted by CANID extractor 32 and data field extractor 33 (S72). MAC generator 35 delivers the generated MAC to MAC message generator 36. MAC message generator 36 stores the MAC obtained from MAC generator 35 into the data field of the CAN message, and generates the MAC message. MAC message generator 36 delivers the generated MAC message to transmitting and receiving unit 50, and transmitting and receiving unit 50 broadcast-transmits the MAC message (S73). The transmission clock time of the MAC held in MAC transmission clock-time holder 344 is updated to the transmission clock time of the this-time transmitted MAC of the MAC message (S74).

In step S71, if the calculated elapsed time does not exceed the set cycle (N in S71), the processes in step S72, step S73, and step S74 are skipped. The above set cycle is set to a longer cycle than the transmission cycle of the main message. For example, the setting cycle is set to a value of an integer times of the transmission cycle of the main message.

FIG. 29 is a diagram illustrating a concrete example of a scheme for generating/transmitting a MAC by the thinning cycle. FIG. 29 illustrates an example that the transmission cycle of the main message is set to 20 ms, and the above set cycle is set to 200 ms. The MAC message is generated/transmitted for main message Mn at the time point of passage of 200 ms from the clock time when the MAC message is transmitted for header main message M1. Generation/transmission of the MAC messages for main message M2, main message M3, ..., and main message M(n - 1) are thinned, main message M2, main message M3, ..., and main message M(n - 1) being generated before 200 ms elapses from the clock time when the MAC message for header main message M1 is transmitted.

Next, as a second example of the group for determining a timing due to a transmission cyclic nature, a description will be given of a scheme for generating/transmitting a MAC in accordance with a transmission cycle of a message. Depending on the ECU, the transmission cycle of the message is switched. This is because the information of the current transmission cycle about whether a short cycle or a long cycle is managed inside the ECU. Regarding the information of the transmission cycle, the information of the current transmission cycle is obtained from application processor 10 as transmission cycle information. In this way, based on the characteristic of a message (data) that the transmission cycle is changed, control is carried out as follows. For example, generation/transmission frequency of MACs is changed in accordance with the current cycle of the main message of which the cycle is changed. For example, when the current cycle of the main message is a short cycle, generation/transmission of the MAC is thinned. On the other hand, when the current cycle of the main message is a long cycle, generation/transmission of the MAC is not thinned. When the cycle of the main message is a short cycle, necessity of generating/transmitting the MAC for all main messages becomes low. Therefore, generation/transmission of MACs is thinned while giving priority to a load decrease.

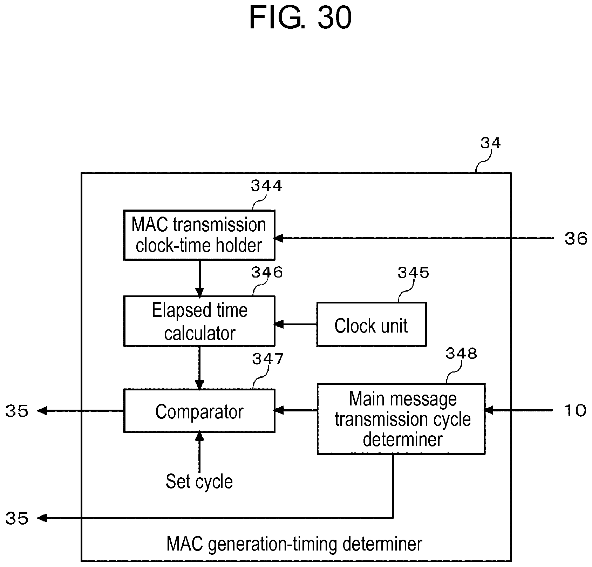

FIG. 30 is a block diagram illustrating functions necessary for MAC generation-timing determiner 34 of message processor 30 in a scheme for generating/transmitting a MAC in accordance with a cycle change. MAC generation-timing determiner 34 in FIG. 30 has a configuration in which main message transmission cycle determiner 348 is added to the configuration of MAC generation-timing determiner 34 in FIG. 27.

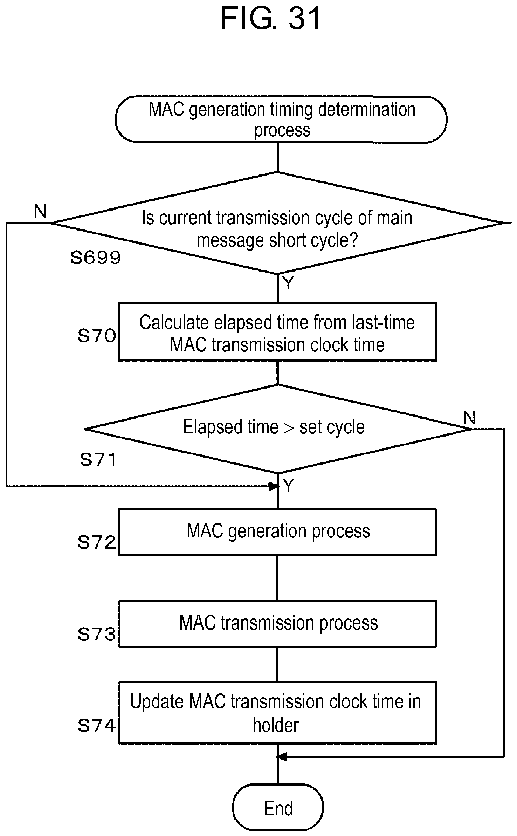

FIG. 31 is a flowchart illustrating a process for determining the MAC generation timing by MAC generation-timing determiner 34 in FIG. 30. MAC transmission clock-time holder 344 holds a last-time transmission clock time of the MAC message. Main message transmission cycle determiner 348 determines whether the current transmission cycle of the main message is a short cycle or a long cycle, based on the transmission cycle information of the main message delivered from application processor 10 (S699). When there are two kinds of a transmission cycle of the main message, a shorter transmission cycle is a short cycle, and a longer transmission cycle is a long cycle.

In step S699, if the current transmission cycle of the main message is a short cycle (Y in S699), subsequent processes become the same as the processes in steps S70 to S74 in FIG. 28. That is, the control becomes that the MAC message is generated/transmitted by the thinning cycle.

In step S699, if the current transmission cycle of the main message is a long cycle (N in S699), subsequent processes become the same as the processes in steps S72 to S74 in FIG. 28. That is, the control becomes that MAC messages are generated/transmitted for all main messages.

Next, as a third example of the group for determining a timing due to a transmission cyclic nature, a description will be given of a scheme for generating/transmitting a MAC in accordance with an event occurrence. In this way, based on the characteristic of a message (data) that transmission is carried out at an event occurrence time, control is carried out as follows. For example, when a main message is transmitted in accordance with the event occurrence, the MAC is always generated/transmitted. Specifically, the event occurrence corresponds to a case where a driver turns ON a headlight or the like. Data transmitted by the event occurrence can be said to be data of high importance. Therefore, the MAC for the data is always generated/transmitted while giving priority to ensuring security.

In the scheme for generating/transmitting a MAC in accordance with an event occurrence, the function necessary for MAC generation-timing determiner 34 of message processor 30 is sufficient if it has a function for determining whether the data contained in the main message generated by main message generator 31 is event transmission type data.

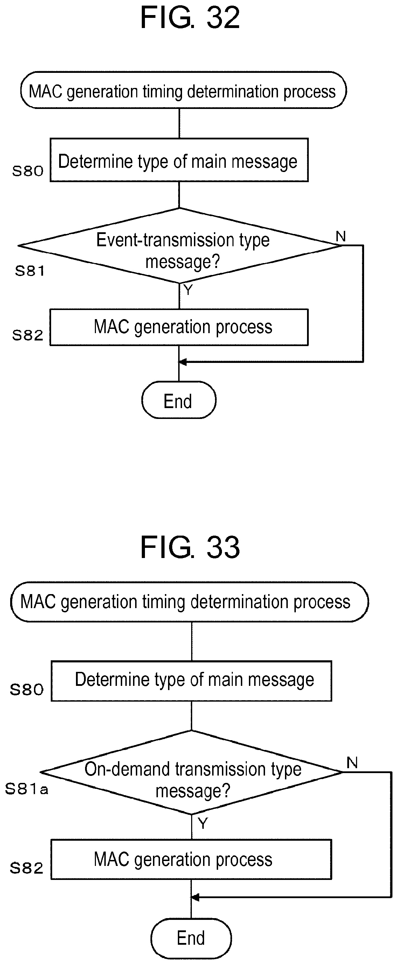

FIG. 32 is a flowchart illustrating a process for determining the MAC generation timing by MAC generation-timing determiner 34, in a scheme for generating/transmitting a MAC in accordance with an event occurrence. MAC generation-timing determiner 34 determines the type of the main message to be transmitted this time, from the CANID extracted from CANID extractor 32 and/or the data extracted from data field extractor 33 (S80). If the type of the main message to be transmitted this time is the event transmission type (Y in S81), MAC generation-timing determiner 34 instructs MAC generator 35 to generate the MAC. MAC generator 35 generates the MAC, based on the CANID and data extracted by CANID extractor 32 and data field extractor 33 (S82). In step S81, if the type of the main message to be transmitted this time is not the event transmission type (N in S81), the process in step S82 is skipped.

Next, as a fourth example of the group for determining a timing due to a transmission cyclic nature, a description will be given of a scheme for generating/transmitting a MAC in accordance with a request message. In this case, the request message is a message for a certain ECU to request other ECU for certain information. The ECU that receives the request message transmits a response main message to CAN bus 200. Based on the characteristic of a message (data) transmitted in this way as a response to the request message, control is carried out as follows. For example, when a main message is transmitted in accordance with the request message, the MAC is always generated/transmitted. Specifically, the request message corresponds to a case where there is a request from other ECU 100 for sending a numerical value of a measuring gauge which is monitored by own ECU 100. Data transmitted in accordance with a request message can be said to be the data of high importance. Therefore, the MAC for the data is always generated/transmitted while giving priority to ensuring security.

In the scheme for generating/transmitting a MAC in accordance with a request message, the function necessary for MAC generation-timing determiner 34 of message processor 30 is sufficient if it has a function for determining whether the data contained in the main message generated by main message generator 31 is on-demand transmission type data.

FIG. 33 is a flowchart illustrating a process for determining the MAC generation timing by MAC generation-timing determiner 34, in a scheme for generating/transmitting a MAC in accordance with a request message. MAC generation-timing determiner 34 determines the type of the main message to be transmitted this time, from the CANID extracted from CANID extractor 32 and/or the data extracted from data field extractor 33 (S80). If the type of the main message to be transmitted this time is the on-demand transmission type (Y in S81a), MAC generation-timing determiner 34 instructs MAC generator 35 to generate the MAC. MAC generator 35 generates the MAC, based on the CANID and data extracted by CANID extractor 32 and data field extractor 33 (S82). In step S81a, if the type of the main message to be transmitted this time is not the on-demand transmission type (N in S81a), the process in step S82 is skipped.

As a first example of the other group illustrated in FIG. 16, a description will be given of a scheme for generating/transmitting a MAC in accordance with a bus occupation rate. For example, transmission frequency of MACs is adjusted by monitoring the bus occupation rate. Specifically, the MAC is not generated/transmitted when the bus occupation rate by the message transmitted from self ECU 100 exceeds the threshold value. In this scheme, a bus traffic amount can be properly adjusted.

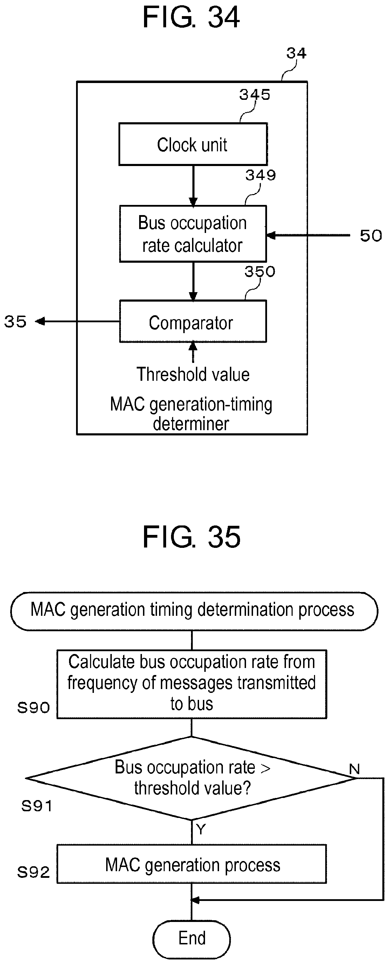

FIG. 34 is a block diagram illustrating functions necessary for MAC generation-timing determiner 34 of message processor 30 in a scheme for generating/transmitting a MAC in accordance with a bus occupation rate. MAC generation-timing determiner 34 in FIG. 34 includes clock unit 345, bus occupation rate calculator 349, and comparator 350. Because the bus occupation rate needs to be calculated from the transmission frequency of all messages that flow in CAN bus 200, the occupation rate per a certain unit time is calculated from the information of time obtained from clock unit 345 and the number of times of transmitting messages in CAN bus 200.

FIG. 35 is a flowchart illustrating a process for determining the MAC generation timing by MAC generation-timing determiner 34 in FIG. 34. Bus occupation rate calculator 349 obtains reception information from transmitting and receiving unit 50 each time when the message (containing the main message and the MAC message) is received from CAN bus 200. Bus occupation rate calculator 349 calculates the transmission frequency of the message in CAN bus 200 from the reception information of the obtained message, and calculates the bus occupation rate, based on the transmission frequency and time information (clock time information) supplied from clock unit 345, and the band of CAN bus 200 (S90).

Comparator 350 compares the calculated bus occupation rate with the threshold value (S91). If the bus occupation rate exceeds the threshold value (Y in S91), comparator 350 instructs MAC generator 35 to generate the MAC. MAC generator 35 generates the MAC, based on the CANID and data extracted by CANID extractor 32 and data field extractor 33 (S92). In step S91, if the bus occupation rate is equal to or lower than the threshold value of the bus occupation rate (N in S91), the process in step S92 is skipped.

As a second example of the other group illustrated in FIG. 16, a description will be given of a scheme for generating/transmitting a MAC at random. The MAC is generated/transmitted at a random timing, for example. Further, the timing needs to be shared on the transmission side and the reception side. In the case of generating/transmitting the MAC at a random timing, there is an effect that the unauthorized attack from the attacker becomes difficult.

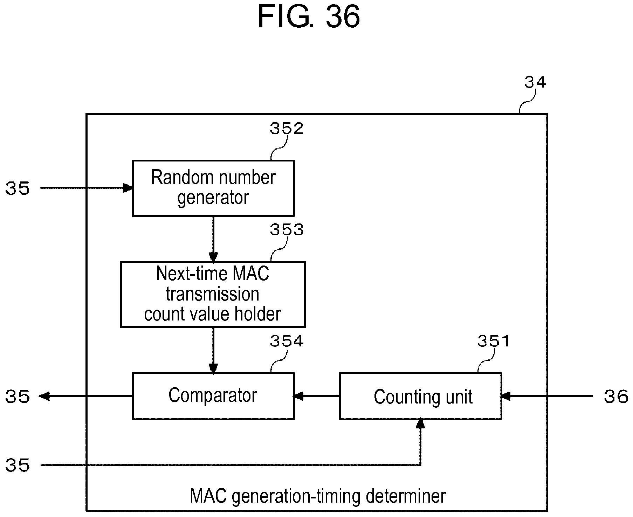

FIG. 36 is a block diagram illustrating functions necessary for MAC generation-timing determiner 34 of message processor 30 in a scheme for generating/transmitting a MAC at random. MAC generation-timing determiner 34 in FIG. 36 includes counting unit 351, random number generator 352, next-time MAC transmission count value holder 353, and comparator 354. Counting unit 351 includes a counter that keeps counting up from a transmission/generation time of the MAC for a main message until a reset time. Random number generator 352 generates a pseudo random number, and supplies the pseudo random number to next-time MAC transmission count value holder 353. Next-time MAC transmission count value holder 353 holds a pseudo random number value supplied from random number generator 352, as a count value up to a next-time MAC transmission.

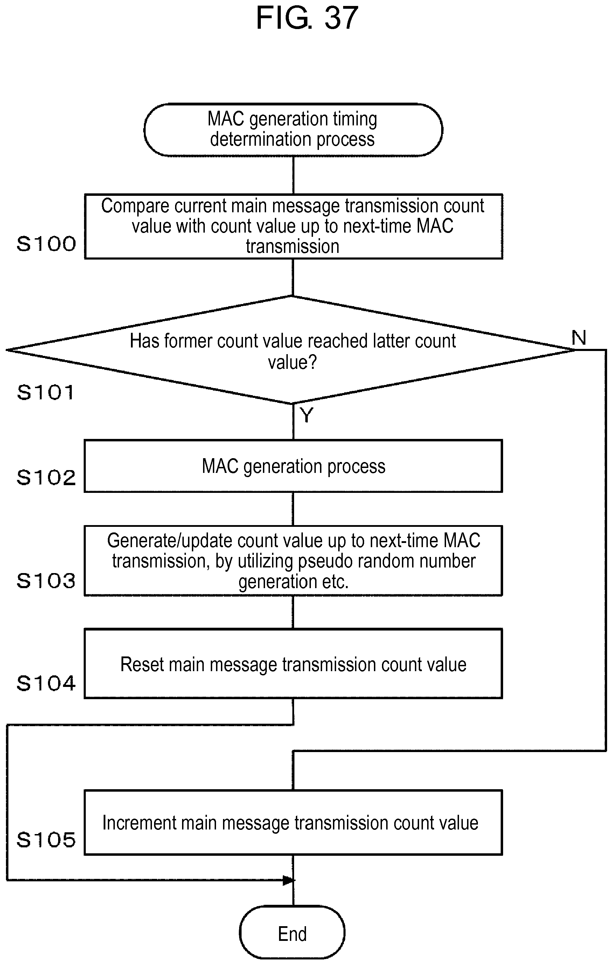

FIG. 37 is a flowchart illustrating a process for determining the MAC generation timing by MAC generation-timing determiner 34 in FIG. 36. Comparator 354 compares a current count value of counting unit 351 with a count value up to the next-time transmission of the MAC held in next-time MAC transmission count value holder 353 (S100). If the current count value of counting unit 351 has reached a count value up to a next-time MAC transmission (Y in S101), comparator 354 instructs MAC generator 35 to generate the MAC. MAC generator 35 generates the MAC, based on the CANID and data extracted by CANID extractor 32 and data field extractor 33 (S102).

Upon receiving the notification of completion of the MAC from MAC generator 35, random number generator 352 generate a new pseudo random number, and supplies the pseudo random number to next-time MAC transmission count value holder 353. Accordingly, the count value up to a next-time transmission of the MAC held in next-time MAC transmission count value holder 353 is updated (S103). Further, upon receiving a notification of a completion of MAC generation from MAC generator 35, counting unit 351 resets the count value (S104).

In step S101, if the current count value of counting unit 351 has not reached a count value up to a next-time MAC transmission (N in S101), counting unit 351 increments the count value (S105). A pseudo random number value generated in step S103 is transmitted to other ECU 100 connected to CAN bus 200, by being contained in the data field of the MAC message, for example. The pseudo random number value contained in an independent control message may be transmitted instead of contained in the MAC message.

As a third example of the other group illustrated in FIG. 16, a description will be given of a scheme for generating/transmitting a MAC in accordance with a vehicle state. For example, during a high-speed running or the period in which a reprogramming tool is connected, the MAC is always generated/transmitted. Data generated in a state of high risk can be said to be data of high importance. Therefore, the MAC for the data is always generated/transmitted while giving priority to ensuring security.

In the scheme for generating/transmitting a MAC in accordance with a vehicle state, the function necessary for MAC generation-timing determiner 34 of message processor 30 is sufficient if it has a function for obtaining vehicle information.

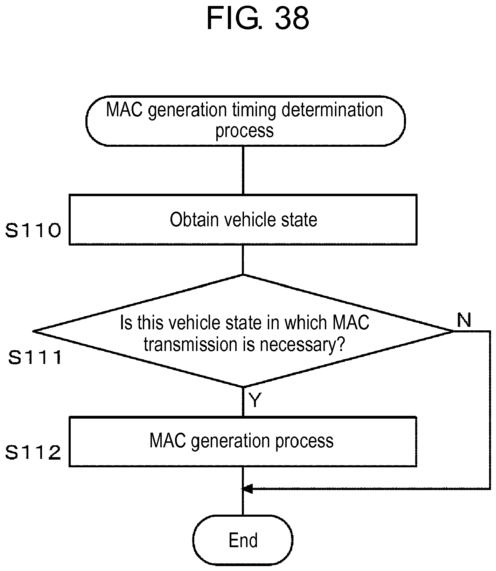

FIG. 38 is a flowchart illustrating a process for determining the MAC generation timing by MAC generation-timing determiner 34, in a scheme for generating/transmitting a MAC in accordance with a vehicle state. MAC generation-timing determiner 34 obtains the vehicle state such as the speed information, for example, based on the data delivered from application processor 10 or the data received by main message generator 31 and extracted by data field extractor 33 (S110).

MAC generation-timing determiner 34 determines whether the obtained vehicle state is a vehicle state in which MAC transmission set in advance is necessary (S111). For example, when the obtained speed exceeds 60 km/h, MAC generation-timing determiner 34 determines that this is the vehicle state requiring MAC transmission by assuming that the vehicle is running at a high speed. If the obtained vehicle state is the vehicle state in which the MAC transmission is necessary (Y in S111), MAC generation-timing determiner 34 instructs MAC generator 35 to generate the MAC. MAC generator 35 generates the MAC, based on the CANID and data extracted by CANID extractor 32 and data field extractor 33 (S112). In step S111, if the obtained vehicle state is not the vehicle state in which the MAC transmission is necessary (N in S111), the process in step S112 is skipped.

As described above, according to the present exemplary embodiment, by controlling the timing of generating/transmitting the MAC, the increase in the bus occupation rate can be suppressed, and processing load and consumption current of each ECU can be decreased. By determining a timing for generating/transmitting the MAC in accordance with a feature (characteristic, importance) of data to be transmitted, security can be improved while suppressing the increase in the load of the bus and the ECU.

The present invention is described above based on the exemplary embodiment. The exemplary embodiment has been described for exemplary purposes only, and those skilled in the art concerned can understand that various modifications are possible in the combination of constituent elements and processing processes in the exemplary embodiment, and that these modifications are also within the range of the present invention.

For example, in reception-side ECU 100, there may be added a function for determining that the vehicle is not in the normally controllable state when too many unauthorized messages are transmitted as a result of counting the number of MAC verification unsuccessful times.

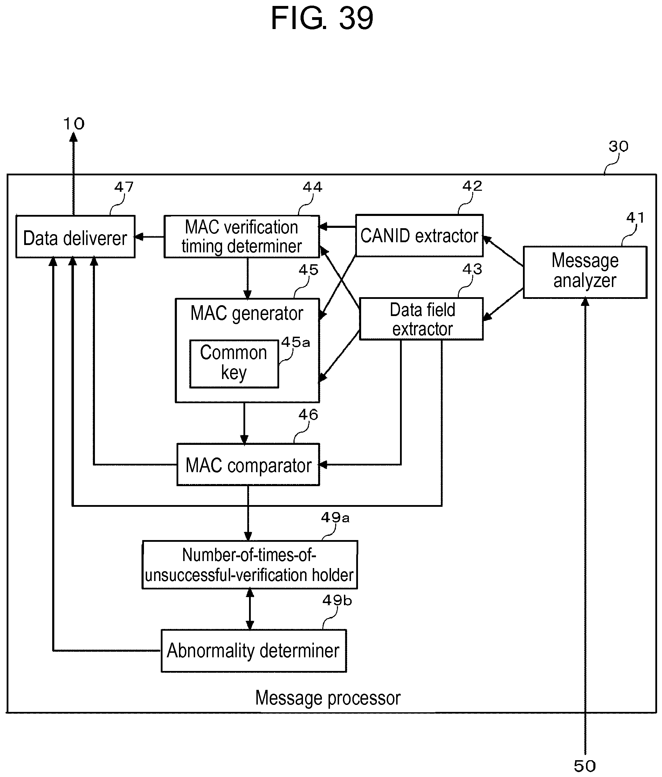

FIG. 39 is a block diagram illustrating a configuration of message processor 30 having a function for counting numbers of unauthorized messages for which MAC verification is unsuccessful. Message processor 30 in FIG. 39 has a configuration in which number-of-times-of-unsuccessful-verification holder 49a and abnormality determiner 49b are added to the configuration of message processor 30 in FIG. 6.

Number-of-times-of-unsuccessful-verification holder 49a holds an accumulated number of times of unsuccessful verification of MACs by MAC comparator 46. Specifically, number-of-times-of-unsuccessful-verification holder 49a counts up each time when MAC verification by MAC comparator 46 is unsuccessful. Abnormality determiner 49b determines that the vehicle is abnormal when the number of unsuccessful times held in number-of-times-of-unsuccessful-verification holder 49a exceeds a set value (for example, 128 times). When abnormality determiner 49b determines that the vehicle is abnormal, abnormality determiner 49b outputs, to application processor 10, an instruction signal for generating the data for making a whole vehicle shift to the fail-safe mode. Further, abnormality determiner 49b may output, to application processor 10, an instruction signal for generating the data for notifying the driver of the abnormality.

In the above description of the exemplary embodiment of the present invention, it is described that out of a plurality of pieces of ordinary data to be transmitted, generation and transmission of MACs for one or some of the ordinary data is omitted. As a modified exemplary embodiment, MACs may be generated for all the plurality of pieces of ordinary data to be transmitted and transmission of a part of MACs may be omitted based on a feature of the generated data.

The outline of one aspect of the present invention is as follow. A transmission device according to a certain aspect of the present invention has a first generator, a second generator, and a transmitter. The first generator generates data to be broadcast-transmitted. The second generator generates a message authentication code for at least the data generated in the first generator. The transmitter broadcast-transmits the data generated in the first generator, and the message authentication code generated in the second generator. The second generator omits generating message authentication codes for one or some of a plurality of pieces of data generated in the first generator. The "first generator" may be application processor 10 in FIG. 3. The "second generator" may be MAC generator 35 in FIG. 4. The "transmitter" may be transmitting and receiving unit 50 in FIG. 3.

According to this aspect, by omitting generation of message authentication codes for one or some of the pieces of data, the load of the CAN and of the device connected to the CAN can be decreased while ensuring a constant level of security.

The second generator may determine whether to generate the message authentication code, based on a feature (at least any one of characteristic and importance) of the data generated in the first generator. According to this, it is possible to generate a message authentication code for data of high importance, and omit generating a message authentication code for data of low importance. Alternatively, generating a message authentication code can be properly omitted in accordance with a characteristic of data. Accordingly, ensuring of security and a load decrease can be efficiently realized.

The second generator may generate a message authentication code when data generated in the first generator has changed, and omit generating a message authentication code in other cases. When data has changed, the data can be said to be data of high importance. Accordingly, a message authentication code for data of high importance is generated, and generating a message authentication code for data of low importance is omitted, so that ensuring of security and a load decrease can be efficiently realized.

The second generator may generate a message authentication code when a change amount of a value expressed by the data generated in the first generator exceeds a threshold value, and omit generating a message authentication code in other cases. When a change of a value expressed by data exceeds a threshold value, the data can be said to be data of high importance. Accordingly, a message authentication code for data of high importance is generated, and generating a message authentication code for data of low importance is omitted, so that ensuring of security and a load decrease can be efficiently realized. The threshold value is set to a value guided by a designer based on an experiment, simulation, or experimental rule.

The second generator may generate a message authentication code when a value expressed by the data generated in the first generator exceeds a threshold value, and omit generating a message authentication code in other cases. When a value expressed by data exceeds a threshold value, the data can be said to be data of high importance. Accordingly, a message authentication code for data of high importance is generated, and generating a message authentication code for data of low importance is omitted, so that ensuring of security and a load decrease can be efficiently realized. The threshold value is set to a value guided by a designer based on an experiment, simulation, or experimental rule.

Another aspect of the present invention is a reception device. This device has a receiving unit and a processing unit. The receiving unit receives data and a message authentication code that are broadcast-transmitted by the transmission device. The message authentication code is for at least this data. The processing unit processes data and a message authentication code received in the receiving unit. Generating message authentication codes for a part of data out of a plurality of pieces of data received in the receiving unit is omitted in the transmission device. The "receiving unit" may be transmitting and receiving unit 50 in FIG. 3. The "processing unit" may be application processor 10 and message processor 30 in FIG. 3.

According to this aspect, verification of the message authentication code for one or some of the pieces of data can be omitted, and the load of the CAN and of the device connected to the CAN can be decreased while ensuring a constant level of security.

Still another aspect of the present invention is a transmission method. This method includes a first step for generating data to be broadcast-transmitted, a second step for generating a message authentication code for at least the data generated in the first step, and a third step for broadcast-transmitting the data generated in the first step and the message authentication code generated in the second step. In the second step, generating message authentication codes for one or some out of a plurality of pieces of data generated in the first step is omitted.

According to this aspect, by omitting generation of message authentication codes for one or some of the pieces of data, the load of the CAN and of the device connected to the CAN can be decreased while ensuring a constant level of security.

Yet another aspect of the present invention is a reception method. This method includes a first step for receiving at least data and a message authentication code for at least the data that are broadcast-transmitted by a transmission device, and a second step for processing the data and the message authentication code received in the first step. Generating message authentication codes for one or some of pieces of data out of a plurality of pieces of data received in the first step is omitted in the transmission device.

According to this aspect, verification of the message authentication code for one or some of the pieces of data can be omitted, and the load of the CAN and of the device connected to the CAN can be decreased while ensuring a constant level of security.

### INDUSTRIAL APPLICABILITY

The present invention can be utilized for a CAN.

### REFERENCE MARKS IN THE DRAWINGS

- 10: application processor
- 30: message processor
- 31: main message generator
- 32: CANID extractor
- 33: data field extractor
- 34: MAC generation-timing determiner
- 35: MAC generator
- 35a: common key
- 36: MAC message generator
- 41: message analyzer
- 42: CANID extractor
- 43: data field extractor
- 43a: separator
- 44: MAC verification timing determiner
- 45: MAC generator
- 45a: common key
- 46: MAC comparator
- 47: data deliverer
- 48: main message temporary holder
- 49a: number-of-times-of-unsuccessful-verification holder
- 49b: abnormality determiner
- 50: transmitting and receiving unit
- 100: ECU
- 200: CAN bus
- 341: last-time data holder
- 342: subtractor
- 343: comparator
- 344: MAC transmission clock-time holder
- 345: clock unit
- 346: elapsed time calculator
- 347: comparator
- 348: main message transmission cycle determiner
- 349: bus occupation rate calculator
- 350: comparator
- 351: counting unit
- 352: random number generator
- 353: next-time MAC transmission count value holder
- 354: comparator
- 500: CAN system

## Claims

1. A transmission device comprising:
a first generator that generates data to be broadcast-transmitted;
a second generator that generates a message authentication code for at least the data generated in the first generator; and
a transmitter that broadcast-transmits the data generated in the first generator and the message authentication code generated in the second generator,
wherein the second generator omits generating message authentication codes for one or some of a plurality of pieces of data generated in the first generator.

2. The transmission device according to claim 1, wherein
the second generator determines whether to generate the message authentication code, based on a feature of the data generated in the first generator.

3. The transmission device according to claim 1, wherein
the second generator generates a message authentication code when the data generated in the first generator changes, and omits generating a message authentication code in other cases.

4. The transmission device according to claim 1, wherein
the second generator generates a message authentication code when a change amount of a value expressed by the data generated in the first generator exceeds a threshold value, and omits generating a message authentication code in other cases.

5. The transmission device according to claim 1, wherein
the second generator generates a message authentication code when a value expressed by the data generated in the first generator exceeds a threshold value, and omits generating a message authentication code in other cases.

6. A reception device comprising:
a receiving unit that receives at least data and a message authentication code for the data that are broadcast-transmitted by a transmission device; and
a processing unit that processes the data and the message authentication code received in the receiving unit,
wherein generating message authentication codes for one or more of a plurality of pieces of data received in the receiving unit is omitted in the transmission device.

7. A transmission method comprising:
a first step for generating data to be broadcast-transmitted;
a second step for generating a message authentication code for at least the data generated in the first step; and
a third step for broadcast-transmitting the data generated in the first step and the message authentication code generated in the second step,
wherein generating message authentication codes for one or more of a plurality of pieces of data generated in the first step is omitted in the second step.

8. A reception method comprising:
a first step for receiving at least data and a message authentication code for the data that are broadcast-transmitted by a transmission device; and
a second step for processing the data and the message authentication code received in the first step,
wherein generating message authentication codes for one or more of a plurality of pieces of data received in the first step is omitted in the transmission device.
